# EUROPEAN PATENT SPECIFICATION

(11) **EP 2 554 562 B1**
(45) Date of publication and mention of the grant of the patent: **07.06.2017**
(21) Application number: 11765695.9
(22) Date of filing: 30.03.2011
(51) Int. Cl.: C08G 63/18, C08L 67/02, C09J 167/02, C09J 193/04, G03G 9/08, G03G 9/087, G03G 9/10

(54) **POLYMER DERIVED FROM DEHYDROABIETIC ACID AND USES THEREOF**
AUS DEHYDRO-ABIETINSÄURE GEWONNENES POLYMER UND VERWENDUNGEN DAVON
POLYMÈRE ISSU DE L'ACIDE DÉSHYDROABIÉTIQUE ET SES UTILISATIONS

(30) Priority: 08.03.2011 JP 2011050701; 27.10.2010 JP 2010241336; 31.03.2010 JP 2010082243
(43) Date of publication of application: 06.02.2013
(73) Proprietor: FUJIFILM Corporation, Tokyo 106-8620 (JP)
(72) Inventor: FUKAGAWA, Kiyotaka, Ashigarakami-gun Kanagawa 258-8577 (JP); HOSOKAWA, Takafumi, Ashigarakami-gun Kanagawa 258-8577 (JP); SATO, Kozo, Ashigarakami-gun Kanagawa 258-8577 (JP); SAKUMA, Toshimitsu, Ashigarakami-gun Kanagawa 258-8577 (JP)
(74) Representative: Hoffmann Eitle
(86) International application number: PCT/JP2011/058129
(87) International publication number: WO 2011/125795

(56) References cited:
- WO-A1-2010/004826
- WO-A1-2011/096145
- JP-A- 4 153 092
- JP-A- 59 022 919
- JP-A- 2000 500 792
- JP-A- 2007 292 815

## Description

### Technical Field

The present invention relates to a polymer derived from dehydroabietic acid and uses thereof.

### Background Art

From the viewpoint of the global environment protection, extrication from dependence on petroleum as a resource is under investigation, and attention has been paid to various natural resources. Extrication from dependence on petroleum can be attempted even in the field of plastic industry, and thus an active movement is under way to use bioethanol, lactic acid, succinic acid and the like, which are obtainable by fermentation of glucose, as polymer raw materials. Among them, polylactic acid obtained by polymerization of lactic acid has already been widely used as a packaging material or the like.

However, there is a further increasing demand for the extrication from dependence on petroleum in recent years, and the importance of naturally derived resins which can be applied and developed for molded articles such as packaging materials and other applications, is increasingly weighted. Accordingly, there is also a demand for the development of naturally derived resins other than polylactic acid.

However, available as a component derived from a natural product is rosin, which can be collected from pine resin. This rosin is formed of a mixture of various terpene-based carboxylic acids, and among those carboxylic acids, it is known to utilize abietic acid as a polymer material (see, for example, Patent Documents 1 and 2).

For example, Patent Documents 1 and 2 disclose that abietic acid is used to modify the chain terminals of a phenolic resin or an epoxy resin, and the resultant is used, in the form of a rosin-modified phenolic resin or a rosin-modified epoxy acid resin, as a binder for paint or the like. However, since these resins employ a phenolic resin or an epoxy resin as the main skeleton, the resins are still petroleum-dependent raw materials and do not comply with the perspective of global environment protection.

Furthermore, there is also known a polymer obtained by polymerizing abietic acid with a polyhydric alcohol (see, for example, Patent Document 3). However, since the polymer described in Patent Document 3 is irregularly polymerized and gelates, a linear polymer having a high molecular weight is not produced, and the polymer is industrially disadvantageous.

Furthermore, a polyester resin for toner containing a non-uniform rosin in a side chain, is also known (see, for example, Patent Document 4).

### Citation List

### Patent Document

Patent Document 1: Japanese Patent Application Laid-Open (JP-A) No. 2008-274150
Patent Document 2: JP-A No. 6-87946
Patent Document 3: JP-A No. 6-33395
Patent Document 4: JP-A No. 2010-20170

### SUMMARY OF INVENTION

### Technical Problem

However, it has been difficult to apply the polyester resin for toner described in Patent Document 4 to a so-called chemical toner such as an emulsion aggregate toner, from the viewpoints of emulsion characteristics and image quality. The present invention was made under such circumstances as described above, and is intended to achieve the following object. That is, an object of the invention is to provide a resin which is a naturally derived novel material and can be used in various applications.

### Solution to Problem

The inventors of the invention focused on dehydroabietic acid, which is one particular component included in pine resin as a natural resource, and succeeded in obtaining a polymer having a skeleton derived from dehydroabietic acid as a main chain, that is, obtaining a polymer which includes a repeating unit containing the skeleton derived from dehydroabietic acid in the main chain. Further, the inventors also discovered that among such polymers, a polymer having a particular glass transition point in particular can be suitably used in various applications, thus completing the invention.

The invention relates to a polymer derived from dehydroabietic acid such as described below and uses thereof.
<1> A polymer derived from dehydroabietic acid, having a repeating unit containing a skeleton derived from dehydroabietic acid in the main chain and having a glass transition point of 80°C or lower.
<2> The polymer as described in the above item <1>, which is a polyester polymer.
<3> The polymer as described in the above item <1> or <2>, wherein the repeating unit is represented by the following formula (A): 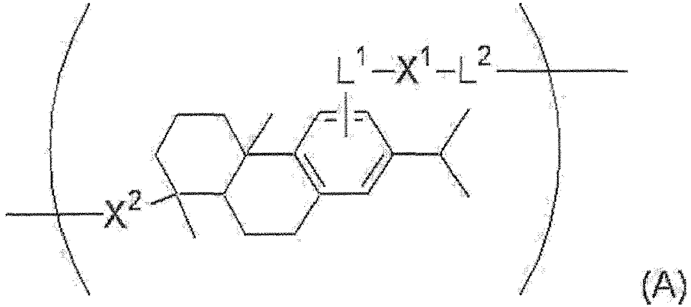 wherein, in formula (A), L¹ represents a divalent organic group having 3 or more carbon atoms; L² represents a divalent organic group; X¹ represents a carbonyloxy group or an oxycarbonyl group; and X² represents an oxycarbonyl group or a carbonyloxymethyl group.
<4> The polymer as described in the above item <3>, wherein L¹ in formula (A) represents a divalent organic group having 3 or more carbon atoms that comprises at least one selected from the group consisting of an alkylene group, an alkenylene group, an arylene group, an aralkylene group, and a group represented by the following formula (D); or a divalent organic group having 3 or more carbon atoms that comprises at least one selected from the group consisting of an alkylene group, an alkenylene group, an arylene group, an aralkylene group, and a group represented by the following formula (D), combined with at least one of an oxygen atom or a carbonyl group: 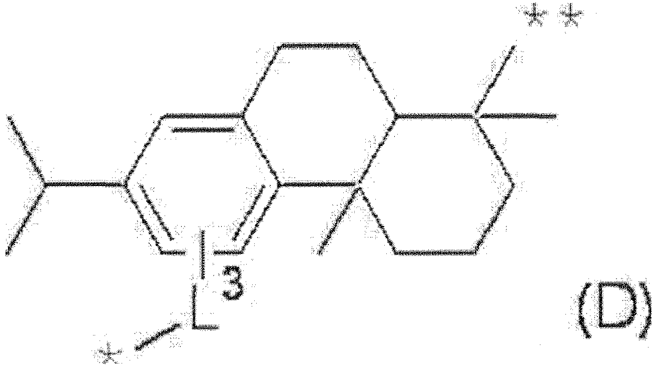 wherein, in formula (D), L³ represents a single bond or a divalent organic group having 1 to 12 carbon atoms; * represents a bonding position to the aromatic ring in formula (A); and ** represents a bonding position to X¹.
<5> The polymer as described in the above item <3> or <4>, wherein L² in formula (A) represents a divalent organic group having 3 or more carbon atoms that comprises at least one selected from the group consisting of an alkylene group, an arylene group and an aralkylene group; or a divalent organic group having 3 or more carbon atoms that comprises at least one selected from the group consisting of an alkylene group, an arylene group and an aralkylene group, combined with at least one of an oxygen atom or a carbonyl group.
<6> The polymer as described in any one of the above items <3> to <5>, wherein L² in formula (A) represents a divalent organic group having 3 or more carbon atoms that comprises an alkylene group combined with at least one of an oxygen atom or a carbonyl group.
<7> The polymer as described in any one of the above items <3> to <6>, which includes only the repeating unit represented by formula (A).
<8> The polymer as described in any one of the above items <1> to <7>, having a weight average molecular weight of from 5,000 to 500,000.
<9> The polymer as described in any one of the above items <1> to <8>, having an acid value of from 5 mg KOH/g to 40 mg KOH/g.
<10> An aqueous resin dispersion containing the polymer described in any one of the above items <1> to <9>.
<11> A binder for toner, containing the polymer described in any one of the above items <1> to <9>.
<12> A toner containing the polymer described in any one of the above items <1> to <9>, a pigment, and a releasing agent.
<13> The toner as described in item 12, wherein the polymer is derived from the aqueous resin dispersion described in the above item <10>.
<14> A developer containing the toner described in the above item <12> or <13> and a carrier.
<15> A film containing the polymer described in any one of the above items <1> to <9>.

### Advantageous Effects of Invention

According to the present invention, a resin which is a naturally derived novel material and can be used in various applications can be provided.

### BRIEF DESCRIPTION OF DRAWINGS

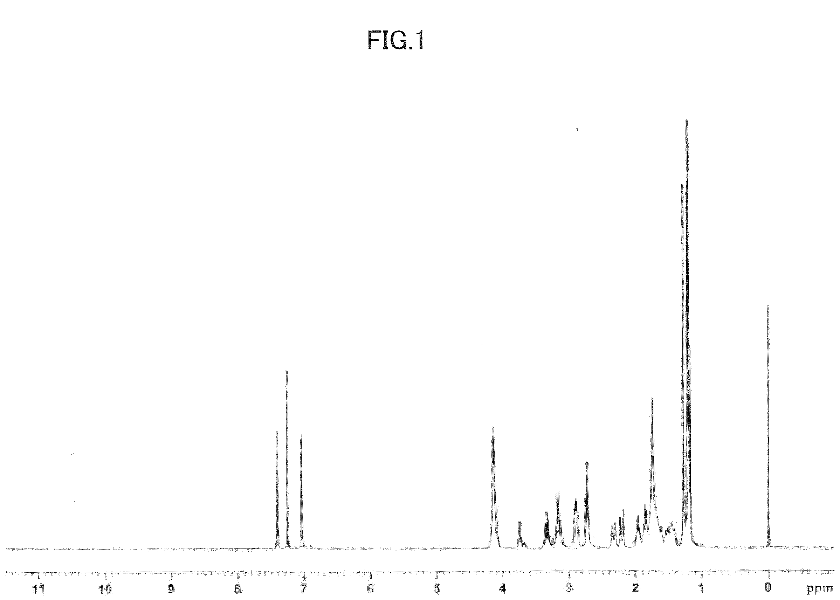

Fig. 1 is a diagram illustrating the ¹H-NMR spectrum of an example of the dehydroabietic acid polymer according to the Examples of the present invention.

### DESCRIPTION OF EMBODIMENTS

The polymer of the present invention is a polymer derived from dehydroabietic acid which has a repeating unit containing a skeleton derived from dehydroabietic acid in the main chain and has a glass transition point of 80°C or lower. Here, the term "skeleton derived from dehydroabietic acid" according to the invention means a divalent group constructed by removing two hydrogen atoms from dehydroabietic acid contained in pine resin, or from a compound in which the carboxyl group of dehydroabietic acid has been reduced to a hydroxyl group (dehydroabietyl alcohol). Specifically, the skeleton derived from dehydroabietic acid means a skeleton represented by the following formula (B1) or (B2). Meanwhile, in formula (B1) and formula (B2), * represents a bonding position.

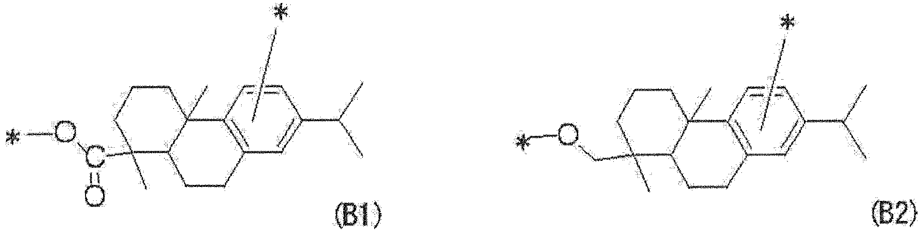

The polymer derived from dehydroabietic acid of the invention has a repeating unit containing a skeleton represented by formula (B1) or formula (B2) in the main chain, and has a glass transition point of 80°C or lower. The glass transition point is preferably 75°C or lower, and more preferably 70°C or lower. There are no limitations on the lower limit, but the glass transition point is preferably -30°C or higher, and more preferably 0°C or higher. Meanwhile according to the invention, the glass transition point means a value measured with a differential scanning calorimeter (manufactured by SII Nanotechnology, Inc., DSC6200).

According to the invention, the polymer is preferably a polyester polymer; more preferably any one of a polycondensate of a dehydroabietic acid derivative and a diol compound, a polycondensate of a dehydroabietyl alcohol derivative and a dicarboxylic acid, and a polycondensate of a dehydroabietic acid derivative or a dehydroabietyl alcohol derivative and a hydroxycarboxylic acid compound; and even more preferably a polyester polymer obtained by polycondensing a dehydroabietic acid derivative and a diol compound.

As a more specific example of the polycondensate of a dehydroabietic acid derivative and a diol compound, a product having, as a repeating unit, a polyester skeleton obtainable by polycondensing a dehydroabietic acid derivative represented by the following formula (C) and a diol compound represented by formula: HO-L²-OH (wherein L² represents a divalent organic group), is preferred: 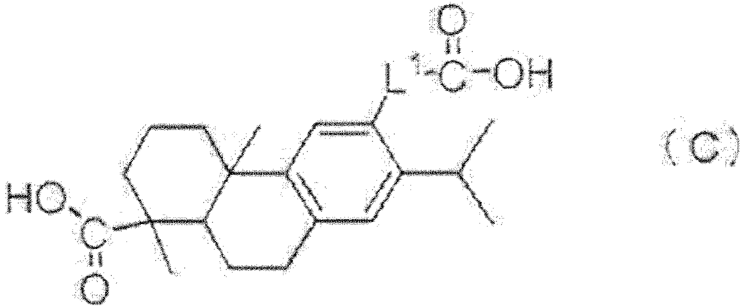 wherein in formula (C), L¹ represents a divalent organic group having 3 or more carbon atoms.

The polymer derived from dehydroabietic acid of the invention is particularly preferably a polymer having a repeating unit represented by the following formula (A): 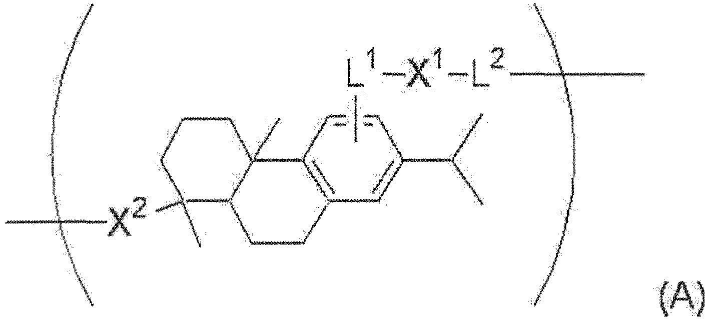 wherein in formula (A), L¹ represents a divalent organic group having 3 or more carbon atoms; L² represents a divalent organic group; X¹ represents a carbonyloxy group or an oxycarbonyl group; and X² represents an oxycarbonyl group or a carbonyloxymethyl group.

That is, the repeating unit represented by formula (A) is represented by any one of the following formulas (A1) to (A4).

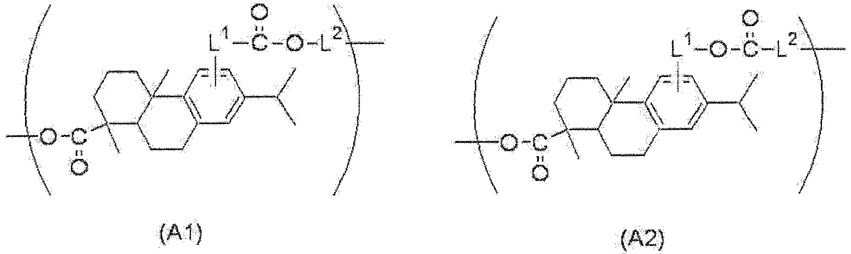

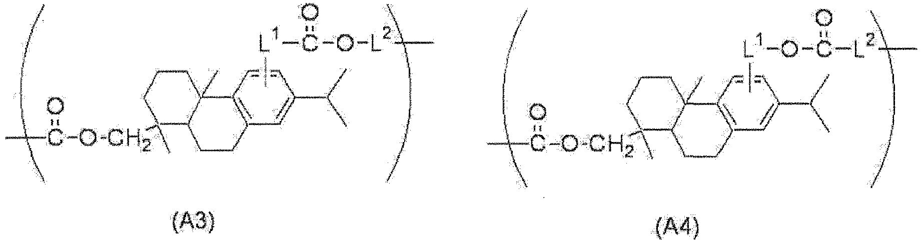

The divalent organic group represented by L¹ is preferably a divalent group which has 3 or more carbon atoms and has carbon atoms in the basic skeleton of the structure. There are no particular limitations on the upper limit of the number of carbon atoms, but for example, the number of carbon atoms may be set to 30 or less, and particularly 25 or less. Thereby, the glass transition point of the polymer can be decreased to 80°C or lower.

Specifically, the divalent organic group represented by L¹ is preferably an alkylene group, an alkenylene group, an arylene group, an aralkylene group, or a divalent group represented by the following formula (D), or is preferably a divalent organic group having 3 or more carbon atoms which is composed of at least one selected from the group consisting of an alkylene group, an alkenylene group, an arylene group, an aralkylene group and a divalent group represented by the following formula (D), combined with at least one of an ether bond or a carbonyl bond.

Meanwhile, the divalent organic group represented by L¹ may be substituted or unsubstituted.

Furthermore, a bonding position of L¹ is not particularly limited, but is preferably the aromatic ring moiety, and more preferably the 12-position or the 14-position when the isopropyl group is defined to be at the 13-position.

Examples of the alkylene group of L¹ include -CₙH₂ₙ- (wherein n represents an integer from 3 to 18, and preferably from 3 to 12), and -CₘH₂ₘ-(cyclo-C₆H₁₀)-CₙH₂ₙ-(wherein m and n independently represent an integer from 0 to 4, and preferably an integer from 1 to 2, but m and n are not simultaneously zero). More specific examples include -C₃H₆-, -C₄H₈-, -C₈H₁₆-, -C₁₀H₂₀-, -CH₂-CH(CH₃)-, -CH₂(cyclo-C₆H₁₀)CH₂-, and 1,4-trans-cyclohexylene group. These groups may be linear or branched, and may also be cyclic.

Examples of the alkenylene group of L¹ include -CₙH₂ₙ-₂- (wherein n represents an integer from 3 to 18, and preferably 3 to 12). More specific examples include -C₃H₄-, -C₄H₆-, -C₈H₁₄-, -C₁₀H₁₈-, -CH₂-CH=C(CH₃)-, and -CH₂CH₂-C(=CH₂)-. These groups may be linear or branched, and may also be cyclic.

Examples of the arylene group of L¹ include a phenylene group, a biphenylene group, a naphthalene group, and -C₆H₄(CₙH₂ₙ)C₆H₄- (wherein n's independently represent an integer from 1 to 8, and preferably 1 to 4). More specific examples include a 1,4-phenylene group, a 1,3-phenylene group, a 4,4'-biphenylene group, a 2,6-naphthalene group, and -C₆H₄C(CH₃)₂C₆H₄-. The alkyl group and alkylene group that may be contained in these groups may be linear or branched, and may also be cyclic.

Examples of the aralkylene group of L¹ include -CₘH₂ₘC₆H₄CₙH₂ₙ- (wherein m and n each independently represent an integer from 0 to 4, and preferably an integer from 1 to 2, but m and n are not simultaneously zero). More specific examples include -CH₂C₆H₄CH₂-and -CH₂CH₂C₆H₄CH₂CH₂-. The alkyl group and alkylene group that may be contained in these groups may be linear or branched, and may also be cyclic.

Examples of the organic group composed of an ether bond (-O-) and/or a carbonyl bond (-CO-), and at least one selected from the group consisting of an alkylene group, an alkenylene group, an arylene group, and an aralkylene group in L¹ include:
- CₘH₂ₘ(OCₙH₂ₙ)ₖ- (wherein k represents an integer from 1 to 8; and preferably an integer from 1 to 3; and m and n independently represent an integer from 2 to 4, and preferably an integer from 2 to 3);
- CₘH₂ₘOC₆H₄OCₙH₂ₙ- (wherein m and n independently represent an integer from 2 to 10, and preferably an integer from 2 to 4);
   *-C(=O)-CₙH₂ₙ- (wherein n represents an integer from 2 to 10, and preferably an integer from 2 to 8); and
   *-C(=O)-CₙH₂ₙ₋₂- (wherein n represents an integer from 2 to 10, and preferably an integer from 2 to 8)
(wherein * represents the part that is bonded to the aromatic ring (for example, the 12-position) of dehydroabietic acid in formula (A). Hereinafter, the same applies).

More specific examples include -CH₂CH₂OCH₂CH₂-, -CH₂CH₂(OCH₂CH₂)₂-, -CH₂CH₂(OCH₂CH₂)₃-, -CH₂CH₂OC₆H₄OCH₂CH₂-, -CH₂CH₂OCO-1,4-C₆H₄COOCH₂CH₂-, -CH₂CH₂OCO-1,3-C₆H₄COOCH₂CH₂-, -C₃H₆OCO-1,4-C₆H₄COOC₃H₆-, -C₄H₈OCO-1,4-C₆H₄COOC₄H₈-, *-C(=O)-C₂H₄-, *-C(=O)-C₃H₆-, *-C(=O)-C₄H₈₋, *-C(=O)-C₈H₁₆-, *-C(=O)CH=CH-, *-C(=O)CH₂C(=CH₂)-, and *-C(=O) CH=C(CH₃)-. These groups may be linear or branched, and may also be cyclic.

Furthermore, it is also preferable that L¹ have a dehydroabietic acid skeleton. For example, as L¹ containing a dehydroabietic acid skeleton, a divalent organic group represented by the following formula (D) may be taken as an example: 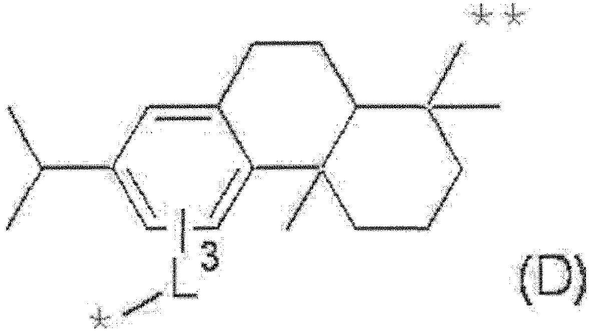 wherein in formula (D), L³ represents a single bond or a divalent organic group having 1 to 12 carbon atoms; * represents a bonding position to the aromatic ring in formula (A); and ** represents a bonding position to X¹.

Preferred examples of the divalent organic group represented by L³ include an alkylene group which may have an ether bond, a carbonyl bond or an ester bond (-COO- or -OCO-). For example,
- (CH₂)ₙ- (wherein n represents an integer from 1 to 12, preferably 1 to 3, and more preferably 1),
- O-CₙH₂ₙ-O- (wherein n represents an integer from 2 to 12, preferably 2 to 8, and more preferably 2 to 4),
- O-(CₙH₂ₙO)ₘ- (wherein m represents an integer from 1 to 6, preferably 1 to 4, and more preferably 1 to 2; and n represents an integer from 2 to 6, preferably 2 to 4, and more preferably 2),
- C(=O)O-CₙH₂ₙ-OC(=O)- (wherein n represents an integer from 2 to 10, preferably 3 to 8, and more preferably 5 to 8), and
- C(=O)-CₙH₂ₙ-C(=O)- (wherein n represents an integer from 2 to 10, preferably 3 to 8, and more preferably 5 to 8).

Specific examples of the divalent organic group represented by L³ include -(CH₂)-, -(CH₂)₃-, -(CH₂)₄-, -(CH₂)₈-, -(CH₂)₁₀-, -CH₂CH₂OCH₂CH₂-, -OCH₂CH₂OCH₂CH₂O-, -OCH₂CH₂CH₂O-, -OCH₂CH₂CH₂CH₂O-, -C(=O)OC2H40C(=O)-, -C(=O)OC₃H₆OC(=O)-, -C(=O)OC₈H₁₆OC(=O)-, -C(=O)OC₁₀H₂₀OC(=O)-, -C(=O)C₂H₄C(=O)-, -C(=O)C₃H₆C(=O)-, -C(=O)C₈H₁₆C(=O)-, and -C(=O) C₁₀H₂₀C(=O)-.

A bonding position of L³ is not particularly limited, but a bonding position is preferably the aromatic ring moiety, and more preferably the 12-position or the 14-position when the isopropyl group is defined to be at the 13-position.

Preferred examples of the divalent organic group represented by L¹ include -C₃H₆-, -C₄H₈-, -C₈H₁₆-, -C₁₀H₂₀-, a 1,4-phenylene group, a 1,3-phenylene group, -CH₂C₆H₄CH₂-, -CH₂CH₂C₆H₄CH₂CH₂-, -CH₂CH₂OCH₂CH₂-, -CH₂CH₂(OCH₂CH₂)₂-, -CH₂CH₂(OCH₂CH₂)₃-, -CH₂CH₂OC₆H₄OCH₂CH₂-, -CH₂CH₂OCO-1,4-C₆H₄COOCH₂CH₂-, -CH₂CH₂OCO-1,3-C₆H₄COOCH₂CH₂-, -C₃H₆OCO-1,4-C₆H₄COOC₃H₆-, -C₄H₈OCO-1,4-C₆H₄COOC₄H₈-, -C(=O)-C₂H₄-, -C(=O)-C₃H₆-, -C(=O)-C₄H₈-, -C(=O)-C₈H₁₆-, -C(=O)CH=CH-, -C(=O)CH₂C(=CH₂)-, -C(=O) CH=C(CH₃)-, and divalent organic groups represented by the following structural formulas:

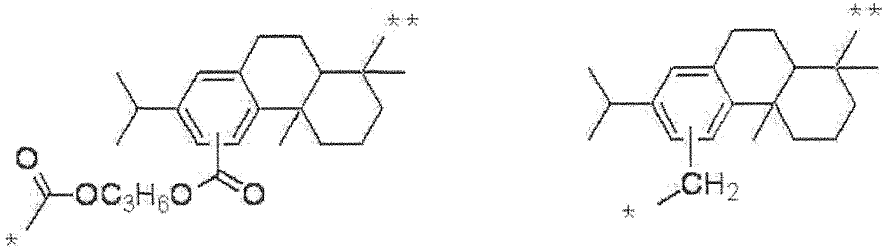

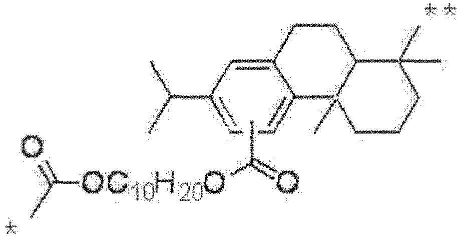

Among these, L¹ is preferably an organic group composed of at least one selected from the group consisting of an alkylene group and a divalent group represented by formula (D), combined with at least one of an oxygen atom or a carbonyl group. Particularly, L¹ is preferably -CₙH₂ₙ- (wherein n represents an integer from 3 to 18, and preferably 3 to 12) such as -C₃H₆-, -C₄H₈-, -C₈H₁₆- or -C₁₀H₂₀-; *-C(=O)-CₙH₂ₙ- (wherein n represents an integer from 2 to 10, and preferably 2 to 8) such as -C(=O)-C₃H₆-, -C(=O)-C₄H₈- or -C(=O)-C₈H₁₆-; a divalent group represented by formula (D), or the like, and is more preferably
*-C(=O)-CₙH₂ₙ-, and a divalent group represented by formula (D).

The divalent organic group represented by L² is not limited as long as it is a divalent group having carbon atoms in the basic skeleton of the structure, but from the viewpoint of adjusting the glass transition point to 80°C or lower, the divalent organic group preferably contains an alkylene group having 3 or more carbon atoms, an arylene group or an aralkylene group. These organic groups may further contain one or plural ether bonds, or one or plural ester bonds (-COO- or -OCO-).

Examples of the alkylene group of L² include the same groups (including preferred examples) of the alkylene defined for L¹.

Examples of the arylene group of L² include the same groups (including preferred examples) of the arylene group defined for L¹.

Examples of the aralkylene group of L² include the same groups (including preferred examples) of the aralkylene group defined for L¹.

Examples of an organic group containing an ether bond (-O-) or an ester bond and an alkylene group, an arylene group and an aralkylene group in L² include -CₘH₂ₘ(OCₙH₂ₙ)ₖ- (wherein k represents an integer from 1 to 8, and preferably an integer from 1 to 4; m and n independently represent an integer from 2 to 4, and preferably an integer from 2 to 3); -CₘH₂ₘOC₆H₄OCₙH₂ₙ- (wherein m and n independently represent an integer from 2 to 10, and preferably an integer from 2 to 4); and -CₘH₂ₘOCOC₆H₄COOCₙH₂ₙ- (wherein m and n independently represent an integer from 2 to 10, and preferably an integer from 2 to 4). More specific examples include -CH₂CH₂OCH₂CH₂- -CH₂CH₂(OCH₂CH₂)₂-, -CH₂CH₂(OCH₂CH₂)₃-, -CH₂CH₂OC₆H₄OCH₂CH₂-, -CH₂CH₂OCO-1,4-C₆H₄COOCH₂CH₂-, -CH₂CH₂OCO-1,3-C₆H₄COOCH₂CH₂-, -C₃H₆OCO-1,4-C₆H₄COOC₃H₆-, and -C₄H₈OCO-1,4-C₆H₄COOC₄H₈-. These groups may be linear or may be branched.

Preferred examples of the divalent organic group represented by L² include -(CH₂)₃-, -(CH₂)₄-, -(CH₂)₈-, -(CH₂)₁₀-, -CH₂CH₂OCH₂CH₂-, -CH₂CH(CH₃)-, -CH₂CH₂(OCH₂CH₂)₂-, -CH₂CH₂(OCH₂CH₂)₃-, -C₆H₄C(CH₃)₂C₆H₄-, -CH₂CH₂OC₆H₄OCH₂CH₂-, -CH₂CH₂OCO-1,4-C₆H₄COOCH₂CH₂-, -CH₂CH₂OCO-1,3-C₆H₄COOCH₂CH₂-, -C₃H₆OCO-1,4-C₆H₄COOC₃H₆-, -C₄H₈OCO-1,4-C₆H₄COOC₄H₈-, and combinations thereof.

Among these, an alkylene group, and an organic group composed of an ether bond or an ester bond and alkylene group are preferred. Specific preferred examples include a group represented by formula: -CₙH₂ₙ- (wherein n represents an integer from 3 to 18, and preferably 3 to 12) such as -(CH₂)₃-, -(CH₂)₄-, -(CH₂)₈-, or -(CH₂)₁₀-; and a group represented by formula: -CH₂CH₂(OCH₂CH₂)ₖ- (wherein k represents an integer from 1 to 8, and preferably 1 to 3) such as -CH₂CH₂OCH₂CH₂-, -CH₂CH₂(OCH₂CH₂)₂-, or -CH₂CH₂(OCH₂CH₂)₃-.

Preferred combinations (formula (A)) of the polymer derived from dehydroabietic acid of the invention include combinations in which L¹ is -(CH₂)₃-, -(CH₂)₄-, -(CH₂)₈-, -(CH₂)₁₀-, -CH₂CH₂OCH₂CH₂-, -CH₂CH₂(OCH₂CH₂)₂-, -OCH₂CH₂CH₂-, -OCH₂CH₂CH₂CH₂-, -C(=O)C₂H₄, -C(=O)C₈H₁₆-, or a divalent group represented by formula (D) in which L³ is -(CH₂)₃-, -(-CH₂)4-, -(CH₂)₈-, -(CH₂)₁₀-, -CH₂CH₂OCH₂CH₂-, -C(=O)CH₂CH₂C(=O), -C(=O)C₈H₁₆C(=O)-, or a divalent group represented by formula (D) or the like; and
L² is -(CH₂)₃-, -(CH₂)4-, -(CH₂)₁₀-, -CH₂CH₂OCH₂CH₂-, -CH₂CH₂(OCH₂CH₂)₂-, -C₆H₄C(CH₃)₂C₆H₄-, -CH₂CH₂OC₆H₄OCH₂CH₂-, -CH₂CH₂OCO-1,4-C₆H₄COOCH₂CH₂-, -CH₂CH₂OCO-1,3-C₆H₄COOCH₂CH₂-, -C₃H₆OCO-1,4-C₆H₄COOC₃H₆-, -C₄H₈OCO-1,4-C₆H₄COOC₄H₈- or the like.

Particularly, according to the invention, a combination in which L¹ is an alkylene group, an organic group composed of an ether bond or a carbonyl bond and an alkylene group, or a divalent organic group represented by formula (D); and L² is an alkylene group, or an organic group composed of an ether bond or an ester bond and an alkylene group, is preferred. Furthermore, a combination in which L¹ is -CₙH₂ₙ-, *-C(=O)-CₙH₂ₙ-, or a divalent organic group represented by formula (D); and L² is -CₙH₂ₙ- or -CH₂CH₂(OCH₂CH₂)ₖ-, is preferred. Particularly, a combination in which L¹ is a divalent organic group represented by formula (D), and L² is -CH₂CH₂(OCH₂CH₂)ₖ-, is preferred.

The polymer of the invention desirably contains a repeating unit represented by formula (A), and may be a homopolymer of the repeating unit represented by formula (A) or may be a copolymer with other monomers. The other monomers are not limited as long as the monomers can be polymerized with the repeating unit represented by formula (A), and to this end, known or commercially available monomers can be used. For example, repeating units obtainable from the other monomers suitably include the following repeating units. These may be used singly or in combination of two or more, and the copolymer may further contain another repeating unit (for example, a repeating unit of -CₘH₂ₘ- (wherein m represents, for example, an integer from 2 to 12, and preferably 2 to 10) or the like). 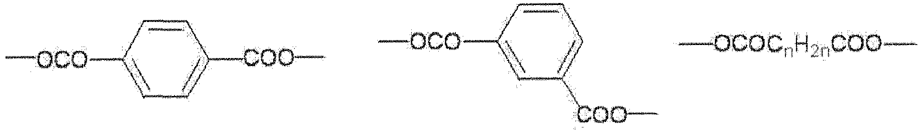 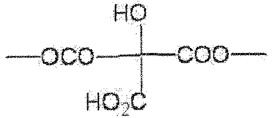 wherein n represents an integer from 2 to 12, and preferably an integer from 2 to 10.

When the polymer derived from dehydroabietic acid of the invention is a copolymer containing other monomers, the molar ratio of the repeating unit represented by formula (A) and the other monomers is not limited, and may be appropriately determined in accordance with the intended function and use. For example, the content ratio of the repeating unit represented by formula (A) in the copolymer can be adjusted to about 30 to 99 (mol%), and preferably about 40 to 90 (mol%).

There are no limitations on the weight average molecular weight of the polymer derived from dehydroabietic acid of the invention, but the weight average molecular weight is preferably about 5,000 to 500,000, and more preferably about 8,000 to 300,000. When the weight average molecular weight is in this range, the polymer derived from dehydroabietic acid of the invention has superior mechanical strength and processing suitability, and is advantageous in view of industrial utilization.

Furthermore, there are no limitations on the molecular weight distribution of the polymer derived from dehydroabietic acid of the invention, but the molecular weight distribution is preferably 1 to 10, and more preferably 1 to 6. When the molecular weight distribution is in this range, it is advantageous in terms of dispersibility and dispersion stability of the emulsion.

The weight average molecular weight and molecular weight distribution according to the invention are values obtainable by a molecular weight analysis (calculated relative to polystyrene standards) by gel permeation chromatography (GPC).

The acid value of the polymer derived from dehydroabietic acid of the invention is not particularly limited, but is preferably from 5 mg KOH/g to 40 mg KOH/g, and more preferably from 7 mg KOH/g to 20 mg KOH/g. Furthermore, the acid value is measured by the method described in the JIS Standard (JIS K 0070: 1992).

When the acid value is in the range described above, for example, in the constituting an aqueous resin dispersion with the polymer, self-dispersibility and dispersion stability are enhanced.

The method of adjusting the acid value to a desired value in the invention is not particularly limited. For example, a method of adjusting the composition ratio of the monomers constituting the polymer may be applied.

The polymer derived from dehydroabietic acid of the invention also includes a polymer of a dehydroabietic acid derivative which has a repeating unit containing a dehydroabietic acid skeleton and has been chemically modified by further introducing a substituent to the repeating unit. Examples of the substituent include a halogen atom (F, Cl, Br or the like), an alkyl group (a methyl group, an isopropyl group, or the like), and an alkoxy group (a methoxy group, an ethoxy group, or the like).

The polymer derived from dehydroabietic acid of the invention has, for example, a skeleton derived from dehydroabietic acid which is a rigid (hard) molecule, and a linking group (for example, L¹ and L², or a diol compound to be copolymerized) which is a flexible (soft) molecule, and therefore, a good balance can be achieved between the mechanical strength as a polymer and flexibility or low temperature processing suitability. Therefore, the polymer derived from dehydroabietic acid can be used in, for example, various applications including the applications for adhesives and binders. Furthermore, when the introduction ratio of a highly flexible molecule is increased, rubber elasticity may also be exhibited. Accordingly, the polymer derived from dehydroabietic acid can also be used in, for example, thermoplastic elastomers derived from natural substances, which are not conventionally known.

There are no limitations on the use of the polymer derived from dehydroabietic acid of the invention, and the polymer can be used in various applications. Examples thereof include adhesives (of hot melt type or the like), tacky adhesives, sealing materials, coating materials, plastic compatibilizers, plastic modifiers, and various films/sheets. In addition to that, the polymer derived from dehydroabietic acid can be utilized in various hoses/tubes, wire coating materials, optical fiber coating materials, and various films/sheets by utilizing the flexibility and excellent low temperature characteristics of the polymer. Furthermore, the polymer derived from dehydroabietic acid can also be utilized in the toner binder for copying machines (for example, xerography). The polymer derived from dehydroabietic acid can be utilized as a thermoplastic elastomer in various forms and in various applications, such as vibration insulating materials, soundproofing materials, various gaskets, and automobile parts.

### [Method for producing polymer derived from dehydroabietic acid]

Next, the method for producing a polymer derived from dehydroabietic acid of the invention will be described.

The polymer derived from dehydroabietic acid of the invention is obtained by, for example, a process of polycondensing a dehydroabietic acid derivative represented by the following formula (E) and a diol compound represented by formula: HO-L²-OH (wherein L² has the same meaning as described above). Furthermore, if necessary, a dehydroabietic acid copolymer is obtained by further copolymerizing another monomer (for example, a dicarboxylic acid) therewith.

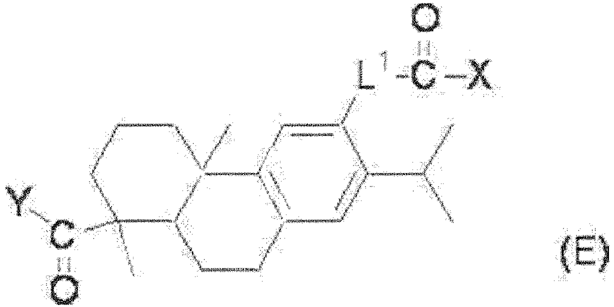

wherein in formula (E), X and Y, which may be identical with or different from each other, each represent -OH, -OR, -OCOR, -OCOOR, -OSO₂R, a halogen atom (F, Cl, Br, or the like), an imidazolyl group, or a triazolyl group; and R represents an alkyl group (preferably having 1 to 4 carbon atoms, and more preferably 1 to 3 carbon atoms), an aralkyl group (preferably having 7 to 10 carbon atoms, and more preferably 7 to 9 carbon atoms), an aryl group (preferably having 6 to 12 carbon atoms, and more preferably 6 to 9 carbon atoms), or a hydroxyalkyl group (preferably having 2 to 6 carbon atoms, and more preferably 2 to 4 carbon atoms).

Among these, -OH and -OR are preferred, and -OH, -OC₃H₆OH and -OC₄H₈OH are particularly preferred.

L¹ is the same as that described above in formula (A).

The diol compound is not limited as long as it is a compound having two hydroxyl groups, and for example, an aliphatic diol and an aromatic diol may be used. Examples of the aliphatic diol include ethylene glycol, 1,2-propanediol, 1,3-propanediol, 1,4-butanediol, 1,6-hexanediol, 1,8-octanediol, 1,10-decanediol, 1,12-dodecane diol, diethylene glycol, triethylene glycol, and tetraethylene glycol. Examples of the aromatic diol include hydroquinone, 4,4'-biphenol, 2,2-bis(4-hydroxyphenyl)propane, and 1,4-bis(2-hydroxyethoxy)benzene. From the viewpoints of a low glass transition point and a high plant degree, a diol having an alkyleneoxy group or an aliphatic diol (particularly, having 2 to 12 carbon atoms, and preferably 2 to 10 carbon atoms) is preferred, and specifically, diethylene glycol, triethylene glycol, tetraethylene glycol, 1,3-propanediol, 1,4-butanediol, 1,10-decanediol and the like are more preferred. Furthermore, a compound further having a hydroxyl group and/or a carboxyl group in addition to two hydroxyl groups is also useful for the purpose of modifying the higher-order structure of the polymer produced or of imparting self emulsifying properties. Examples thereof include citric acid, malic acid, tartaric acid, glyceric acid, glycerin, trimethylolpropane, and pentaerythritol. These diol compounds are used singly or as mixtures of two or more kinds.

According to the invention, a polymer derived from dehydroabietic acid having a glass transition point of 80°C or lower can be obtained particularly by selecting L¹, L² and the like, which have flexible structures, so as to increase the mobility of molecules.

The dehydroabietic acid derivative represented by formula (E) that is supplied to the production of the polymer derived from dehydroabietic acid of the invention can be obtained from rosin.

Rosin is a resin component collected from pine resin, and rosin is classified, based on the method of collection, into three representative kinds such as "gum rosin", "tall rosin" and "wood rosin". The constituent components contained in the rosin may vary depending on the method of collecting these components, the place of production of pine tree, and the like, but generally, rosin is a mixture of diterpene-based resin acids such as abietic acid (1), neoabietic acid (2), palustric acid (3), levopimaric acid (4), dehydroabietic acid (5), pimaric acid (6), and isopimaric acid (7), the structures of which are shown below:

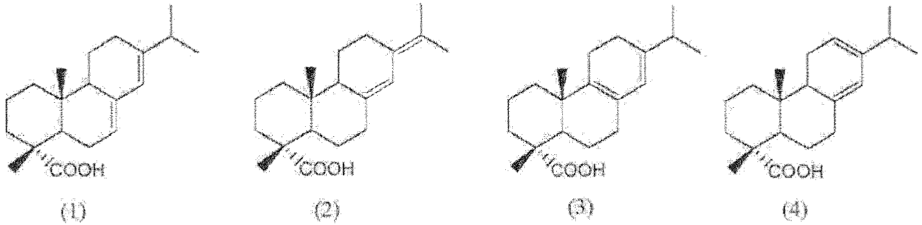

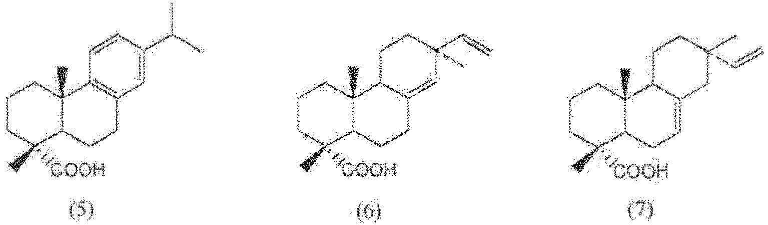

Among these diterpene-based resin acids, the compounds respectively represented by the structural formulas (1) to (4) can be modified to dehydroabietic acid (5) and abietic acid (8) having the structure described below, for example, by heat treating the compounds in the presence of an apatite-based catalyst and thereby causing disproportionation. The modification can be carried out by making reference to, for example, JP-A No. 2002-284732.

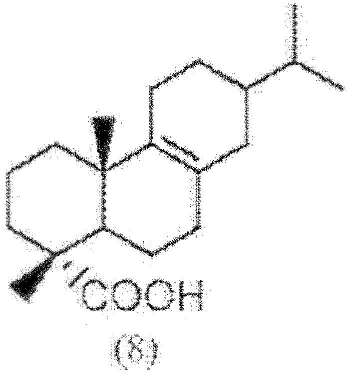

That is, a dehydroabietic acid derivative that is needed to carry out synthesis of the polymer derived from dehydroabietic acid of the invention can be easily produced, at low cost in an industrial scale, by subjecting rosin which is a mixture of various resin acids to an appropriate chemical treatment.

Furthermore, the 12-position of dehydroabietic acid has a high electron density, and is susceptible to various aromatic electrophilic substitution reactions. That is, since acylation, halogenation and the like readily occur, a functional group having a carboxyl group can be introduced to the 12-position by carrying out conversion of the functional group through a known reaction. Now, an example of a specific production method for the polymer derived from dehydroabietic acid of the invention will be described below.

### (Synthesis route)

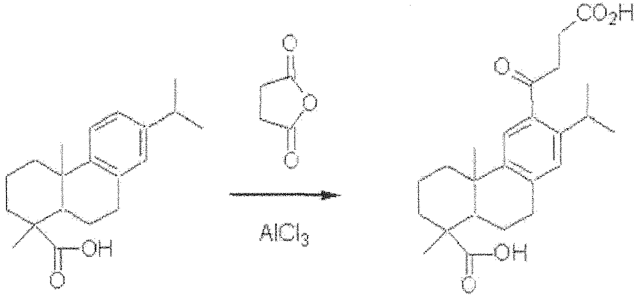

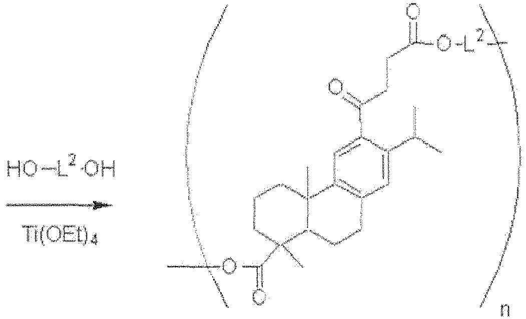

Hereinafter, a synthesis process for a polyester polymer obtainable by polycondensation of the dehydroabietic acid derivative and the diol compound shown in the above synthesis route will be described in detail.

In the above-described synthesis route, the process of synthesizing a polymer (polyester polymer) having a repeating unit represented by formula (A) can be carried out by polycondensing a compound represented by formula (C) and a diol compound by a known method.

Examples of specific synthesis methods include the methods described in Shin-Kobunshi Jikkengaku 3, Kobunshi no Gosei/Hanno (2) [New Polymer Experimentation 3, Synthesis and Reaction of Polymers (2)], p. 78-95, Kyoritsu Shuppan Co., Ltd. (1996) (for example, a transesterification method, a direct esterification method, a polycondensation method using an acid chloride, a low temperature solution polymerization method, a high temperature solution polycondensation method, and an interface polyconensation method), and in the invention, a transesterification method and a direct esterification method in particular are preferably used.

The transesterification method is a method of synthesizing a polyester by heating a diol compound and a dicarboxylic acid ester in a molten state or in a solution state, and if necessary, in the presence of an acid catalyst, and thereby inducing dealcoholization-polycondensation.

The direct esterification method is a method of synthesizing a polyester by heating and dehydrating a diol compound and a dicarboxylic acid compound in a molten state or in a solution state in the presence of an acid catalyst, and thereby polycondensing the compounds.

The acid chloride method is a method of synthesizing a polyester by heating a diol compound and a dicarboxylic acid chloride compound in a molten state or in a solution state, and if necessary, in the presence of a basic catalyst to thereby cause dehydrochlorination, and polycondensing the compounds.

The interface polymerization method is a method of synthesizing a polyester by dissolving the diol compound in water, dissolving the dicarboxylic acid chloride compound in an organic solvent, and subjecting the compounds to polycondensation at the water/organic solvent interface in the presence of an alkali, by using an interlayer transfer catalyst.

Meanwhile, a synthesis example for the polymer formed from a repeating unit represented by formula (A) will be described more specifically in the following Examples.

According to the invention, in regard to the synthesis of a polyester polymer based on the synthesis route described above, a polyester copolymer can be synthesized by using another polyvalent carboxylic acid component in combination, in addition to the dehydroabietic acid derivative having a carboxyl group at the 12-position. A synthesis example of the copolymer can be carried out by making reference to known methods, but in general, a copolymer is obtained by heating a dehydroabietic acid derivative together with an appropriate amount of another dicarboxylic acid and a diol compound under reduced pressure at a high temperature (preferably about 200°C to 280°C), and carrying out polycondensation by distilling off low boiling point compound such as water and alcohol that are produced as a result of the reaction.

Examples of the other polyvalent carboxylic acid component which is useful for the synthesis of the copolymer include various aliphatic and aromatic polyvalent carboxylic acids, and acid anhydrides thereof. For example, succinic acid, adipic acid, sebacic acid, brassilic acid, 1,4-cyclohexanedicarboxylic acid, maleic acid, fumaric acid, terephthalic acid, isophthalic acid, trimellitic acid, pyromellitic acid, octenylsuccinic acid, decenylsuccinic acid, dodecenylsuccinic acid, tetradecenylsuccinic acid, hexadecenylsuccinic acid, octadecenylsuccinic acid, and respective corresponding acid anhydrides thereof are preferably used.

Furthermore, the polymer derived from dehydroabietic acid of the invention is also obtained by, for example, a process of polycondensing a dehydroabietyl alcohol derivative represented by the following formula (F1) and a dicarboxylic acid derivative represented by the following formula (F2). Also, if necessary, a copolymer derived from dehydroabietic acid is obtained by further copolymerizing another monomer therewith. 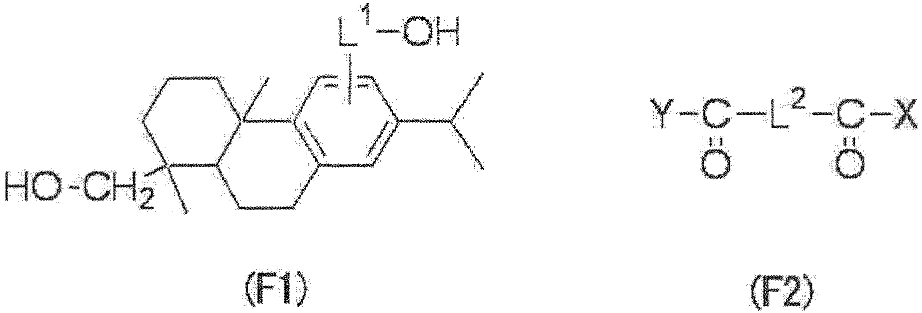 wherein in formula (F1) and formula (F2), L¹ has the same meaning as L¹ defined in formula (A); L² has the same meaning as L² defined in formula (A);
X and Y, which may be identical with or different from each other, each represent -OH, -OR, -OCOR, -OCOOR, -OSO₂R, a halogen atom (F, Cl, Br or the like), an imidazolyl group, or a triazolyl group; and R represents an alkyl group (preferably having 1 to 4 carbon atoms, and more preferably 1 to 3 carbon atoms), an aralkyl group (preferably having 7 to 10 carbon atoms, and more preferably 7 to 9 carbon atoms), an aryl group (preferably having 6 to 12 carbon atoms, and more preferably 6 to 9 carbon atoms), or a hydroxyalkyl group (preferably having 2 to 6 carbon atoms, and more preferably 2 to 4 carbon atoms).

Among these, -OH or -OR is preferred, and -OH or -OCH₃ is particularly preferred.

The dehydroabietyl alcohol derivative represented by formula (F1) can be produced by reducing the carboxyl group of the aforementioned dehydroabietic acid derivative according to a conventional method.

Furthermore, the method of polycondensing the dehydroabietyl alcohol derivative represented by formula (F1) and the dicarboxylic acid derivative represented by formula (F2) is as described above.

Also, the polymer derived from dehydroabietic acid of the invention is also obtained by, for example, a process of polycondensing a dehydroabietyl alcohol derivative represented by the following formula (G1) and a hydroxycarboxylic acid derivative represented by the following formula (G2). Furthermore, if necessary, a copolymer derived from dehydroabietic acid is obtained by further copolymerizing another monomer therewith. 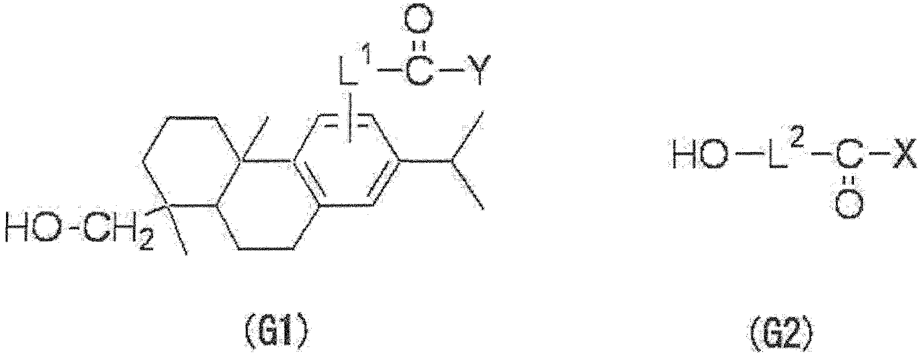 wherein in formulas, L¹ has the same meaning as L¹ defined in formula (A); L² has the same meaning as L² defined in formula (A);
X and Y, which may be identical with or different from each other, each represent -OH, -OR, -OCOR, -OCOOR, -OSO₂R, a halogen atom (F, Cl, Br or the like), an imidazolyl group or a triazolyl group; and R represents an alkyl group (preferably having 1 to 4 carbon atoms, and more preferably 1 to 3 carbon atoms), an aralkyl group (preferably having 7 to 10 carbon atoms, and more preferably 7 to 9 carbon atoms), an aryl group (preferably having 6 to 12 carbon atoms, and more preferably 6 to 9 carbon atoms), a hydroxyalkyl group (preferably having 2 to 6 carbon atoms, and more preferably 2 to 4 carbon atoms), or the like.

Among these, -OH or -OR is preferred, and -OH or -OCH₃ is particularly preferred.

The dehydroabietyl alcohol derivative represented by formula (G1) can be produced by reducing the carboxyl group of the aforementioned dehydroabietic acid derivative according to a conventional method.

Furthermore, the method of polycondensing the dehydroabietyl alcohol derivative represented by formula (G1) and the hydroxycarboxylic acid derivative represented by formula (G2) is as described above.

Also, a polymer having a repeating unit other than an ester bond can also be obtained as the polymer derived from dehydroabietic acid according to the invention. For example, when polycondensation based on an electrophilic substitution reaction is carried out in a molten state or in a solution state, in the presence of a Lewis acid catalyst, a polyketone polymer can be obtained from a dehydroabietic acid derivative and a dicarboxylic acid chloride compound, a polysulfone polymer can be obtained from a dehydroabietic acid derivative and a sulfonic acid dichloride compound, and a polymethylene polymer can be obtained from a dehydroabietic acid derivative and a para-formaldehyde.

As discussed above, the polymer derived from dehydroabietic acid of the invention can adopt various modes of bonding, but from the viewpoints of the convenience of monomer synthesis, and the convenience of purification in the post-treatment after polymerization, a polyester synthesized in a molten state is most preferred.

The polymer derived from dehydroabietic acid of the invention described above can be used by itself as a polymer material. Furthermore, a composite material can also be obtained by mixing the polymer derived from dehydroabietic acid of the invention with various materials. Hereinafter, composite materials containing the polymer derived from dehydroabietic acid of the invention will be explained.

### [Composite material containing polymer derived from dehydroabietic acid]

The polymer derived from dehydroabietic acid of the invention can be produced into composite materials by mixing the polymer with various materials, so as to improve the properties.

When the polymer derived from dehydroabietic acid is produced into a composite material, it is suitable to carry out polymer alloying (mixing of polymers of different kinds) and/or incorporation of a filler, and thereby, impact resistance, heat resistance, durability, moldability and the like can be improved.

As the polymer used for the polymer alloying, polymers derived from dehydroabietic acid of the invention having different polymer characteristics may be used in combination, or the polymer derived from dehydroabietic acid of the invention and another polymer may be used in combination.

The polymer other than the polymer derived from dehydroabietic acid of the invention, which is used in the polymer alloying, is not limited, and any known or commercially available polymer can be used. Examples include:
1) olefin-based resins (homopolymers of α-olefins such as ethylene, propylene, 1-butene, 1-pentene, 1-hexene, and 4-methyl-1-pentene; homopolymers of cycloolefins such as cyclopentene, cyclohexene, cyclooctene, cyclopentadiene, 1,3-cyclohexadiene, bicyclo[2.2.1]hept-2-ene, tricyclo[4.3.0.1^{2,5}]deca-3,7-diene, and tetracyclo[4.4.0.1^{2,5}.1^{7,10}]dodec-3-ene; copolymers of the above-described α-olefins; and copolymers of α-olefins and other monomers capable of copolymerization with α-olefins, such as vinyl acetate, maleic acid, vinyl alcohol, methacrylic acid, methyl methacrylate, and ethyl methacrylate);
2) polyester-based resins (copolymers of dicarboxylic acid monomers such as terephthalic acid, isophthalic acid, 2,6-naphthalenedicarboxylic acid, 1,4-naphthalenedicarboxylic acid, succinic acid, adipic acid, and sebacic acid, and diols or polyhydric alcohol monomers such as ethylene glycol, propylene glycol, 1,4-butylene glycol, 1,4-cyclohexanedimethanol, diethylene glycol, triethylene glycol, polypropylene glycol, polyoxytetramethylene glycol, alkylene oxide adducts of bisphenol compounds or derivatives thereof, trimethylolpropane, glycerin, and pentaerythritol; polycondensates of hydroxycarboxylic acids such as lactic acid, β-hydroxybutyric acid, p-hydroxybenzoic acid, and 2,6-hydroxynaphthoic acid);
3) polyamide-based resins (polymers having an acid amide bond in the chain, which are obtainable by polycondensation of 3-membered or higher-membered lactams, polymerizable ω-amino acids, or dibasic acids and diamines or the like; specifically, polymers of ε-caprolactam, aminocaproic acid, enantholactam, 7-aminoheptanoic acid, 11-aminoundecanoic acid, 9-aminononanoic acid, α-pyrrolidone and α-piperidone; and polymers obtainable by polycondensation of diamines such as hexamethylenediamine, nonamethylenediamine, undecamethylenediamine, dodecamethylenediamine and metaxylenediamine, and dicarboxylic acids such as terephthalic acid, isophthalic acid, adipic acid, sebacic acid, dodecane dibasic acid and glutaric acid, or copolymers thereof. For example, Nylon-4, Nylon-6, Nylon-7, Nylon-8, Nylon-11, Nylon-12, Nylon-6,6, Nylon-6,10, Nylon-6,11, Nylon-6,12, Nylon-6T, Nylon-6/Nylon-6,6 copolymer, Nylon-6/Nylon-12 copolymer, Nylon-6/Nylon-6T copolymer, and Nylon-6I/Nylon-6T copolymer);
4) rubbers or elastomers (natural rubber, isoprene rubber, butadiene rubber, 1,2-polybutadiene rubber, styrene-butadiene rubber, chloroprene rubber, nitrile rubber, butyl rubber, ethylene-propylene rubber, chlorosulfonated polyethylene, acrylic rubber, epichlorohydrin rubber, polysulfide rubber, silicone rubber, fluororubber, urethane rubber, and the like); and
5) other resins such as polycarbonate-based resins, acrylic resins, urethane-based resins, polyvinyl alcohol, vinyl chloride-based resin, styrene-based resin, polyacrylonitrile, polyvinylidene chloride, fluororesins, polyacetal, polysulfone, ABS, and polyether ether ketone.

Among the polymers used in the polymer alloying as described above, from the viewpoints of the plant degree, polylactic acid, poly-β-hydroxybutyric acid, polybutylene succinate and the like are preferred.

Polymer alloying may be carried out based on a known method. Usually, polymer alloying is carried out by melt kneading or the like; however, in the case where phase separation occurs by simple kneading, it is desirable to form a uniform phase by using a compatibilizer, causing secondary block polymerization or graft polymerization, or dispersing one of the polymers in the form of clusters.

Furthermore, from the viewpoint of achieving polymer alloying without impairing the characteristics exhibited by the polymer derived from dehydroabietic acid of the invention, the content ratio (on a mass basis) of the dehydroabietic acid polymer of the invention in the polymer alloy is generally 1% to 100%, preferably 20% to 100%, and more preferably 50% to 100%.

Furthermore, the polymer derived from dehydroabietic acid of the invention can have the polymer properties improved to desired properties by incorporating various fillers. Particularly, in the improvement of heat resistance, durability and impact resistance, incorporation of a filler is effective.

As the filler, any of an inorganic filler and an organic filler may be used.

Suitable examples of the inorganic filler include fibrous inorganic fillers such as a glass fiber, a carbon fiber, a graphite fiber, a metal fiber, a potassium titanate whisker, an aluminum borate whisker, a magnesium-based whisker, a silicon-based whisker, wollastonite, sepiolite, a slag fiber, zonolite, ellestadite, a gypsum fiber, a silica fiber, a silica-alumina fiber, a zirconia fiber, a boron nitride fiber, a silicon nitride fiber, and a boron fiber; and plate-shaped or particulate inorganic fillers such as glass flakes, non-swelling mica, fullerene, carbon nanotubes, carbon black, graphite, metal foil, ceramic beads, talc, clay, mica, sericite, zeolite, bentonite, dolomite, kaolin, a silicic acid fine powder, a feldspar powder, potassium titanate, Shirasu balloon, calcium carbonate, magnesium carbonate, barium sulfate, calcium oxide, aluminum oxide, titanium oxide, magnesium oxide, aluminum silicate, silicon oxide, aluminum hydroxide, magnesium hydroxide, gypsum, novaculite, dosonite, and white clay.

Suitable examples of the organic filler include synthetic fibers such as a cellulose (nano)fiber, a polyester fiber, a nylon fiber, an acrylic fiber, a regenerated cellulose fiber, an acetate fiber, and an aramid fiber; natural fibers such as kenaf, ramie, cotton, jute, hemp, sisal, Manila hemp, flax, linen, silk and wool; fibrous organic fillers obtainable from microcrystalline cellulose, sugar cane, wood pulp, waste paper, old paper and the like; and particulate organic fillers such as organic pigments.

The polymer derived from dehydroabietic acid of the invention is used, in many cases where the polymer is applied as actual manufactured products, for example, as a composite material having a flame retardant or the like incorporated therein.

The flame retardant is not limited as long as it is a material which makes a polymer material difficult to burn or prevents flames from spreading, and any known or commercially available agents can be used. For example, halogen-based (bromine and chlorine) compounds, phosphorus-based compounds (aromatic phosphoric acid esters, polyphosphates, and the like), silicon-containing flame retardants, nitrogen compound-based flame retardants, and inorganic flame retardants can be used. Particularly, from the viewpoint of environmental safety, aluminum hydroxide, magnesium hydroxide and the like can be preferably used. The content may be adjusted usually to 30 parts by mass or less, and preferably 10 parts by mass or less, relative to 100 parts by mass of the polymer of the invention.

A material which is used in combination with the flame retardant to increase flame retardance or form a carbide film on the surface of resins to suppress spread of fire (flame retardant aid), is also useful as a composite material containing the polymer derived from dehydroabietic acid of the invention. Specifically, antimony compounds among the inorganic systems, and organic aromatic compounds (phenolic derivatives) are preferably used.

The polymer derived from dehydroabietic acid of the invention may also contain a plasticizer. Thereby, flame retardance and moldability can be further enhanced. As the plasticizer, those conventionally used in molding of polymers can be used. Examples include polyester-based plasticizers, glycerin-based plasticizers, polyvalent carboxylic acid ester-based plasticizers, polyalkylene glycol-based plasticizers, and epoxy-based plasticizers. The content may be usually adjusted to 30 parts by mass or less, and preferably 10 parts by mass or less, relative to 100 parts by mass of the polymer of the invention.

In the polymer derived from dehydroabietic acid of the invention, one kind or two or more kinds of additives that are conventionally used, for example, a stabilizer, an impact resistance enhancing agent, a crystal nucleating agent, a lubricant, an antistatic agent, a surfactant, a pigment, a dye, a filler, an oxidation inhibitor, a processing aid, an ultraviolet absorber, an antifogging agent, an antifungal agent, and an antimicrobial agent, may be added.

The composite material of the invention that is obtained by mixing the materials described above can be shaped (molded) by various methods. As the molding method, for example, extrusion molding and injection molding are used. The use of the molded product thus obtainable is not particularly limited, but examples include constituent components for automobiles, electrical appliances, electric/electronic equipment (OA/media-related equipment, optical equipment, communication equipment, and the like), mechanical parts, materials for housing/construction, containers, and various containers for cosmetic products and beverage bottles. Hereinafter, specific applications will be described in more detail.

### [Aqueous resin dispersion]

The aqueous resin dispersion (hereinafter, also simply called "resin dispersion") of the invention contains at least one kind of the polymer derived from dehydroabietic acid, and this polymer is dispersed in an aqueous medium to constitute the dispersion. Since the polymer derived from dehydroabietic acid is excellent in self-dispersibility and dispersion stability, the polymer can easily constitute an aqueous dispersion.

Particularly, the acid value of the polymer is preferably from 5 mg KOH/g to 40 mg KOH/g. When the acid value is 5 mg KOH/g or greater, since hydrophilicity of the polymer derived from dehydroabietic acid is satisfactory, the aqueous resin dispersion thus obtainable has satisfactory dispersion stability, and aggregation can be suppressed, so that resin particles having a desired particle size can be obtained, which is preferable. Furthermore, when the acid value is 40 mg KOH/g or less, hydrophilicity is appropriate, the generation of coarse particles can be suppressed, and a satisfactory particle size distribution can be obtained. Furthermore, it is more preferable in view of dispersion stability as described above that the acid value be from 7 mg KOH/g to 20 mg KOH/g.

Here, self-dispersibility means that, for example, when a dispersed state (particularly, a dispersed state according to a reverse phase emulsification method) is attained in the absence of a surfactant, a polymer can achieve a dispersed state in an aqueous medium by means of the functional group (particularly, an acidic group or a salt thereof) carried by the polymer itself, and means that a resin dispersion which does not contain a free-form emulsifier can be constituted.

Furthermore, the dispersed state includes both an emulsified state in which a polymer is dispersed in a liquid form in an aqueous medium (emulsion), and a dispersed state in which a polymer is dispersed in a solid state in an aqueous medium (suspension).

According to the invention, the polymer is preferably a water-insoluble polymer. A water-insoluble polymer refers to a polymer which gives an amount of dissolution of 10 g or less when the polymer is dried for 2 hours at 105°C and then dissolved in 100 g of water at 25°C. The amount of dissolution is preferably 5 g or less, and more preferably 1 g or less. The amount of dissolution as described above is the amount of dissolution determined when the water-insoluble polymer is 100% neutralized with sodium hydroxide or acetic acid according to the type of the salt forming group of the water-insoluble polymer.

As the method for preparing an emulsified or dispersed state of the polymer, that is, an aqueous dispersion of the polymer, a reverse phase emulsification method may be used. An example of the reverse phase emulsification method may be a method of dissolving or dispersing a polymer in a solvent (for example, a hydrophilic organic solvent), subsequently directly pouring the solution or dispersion into water without adding a surfactant, stirring and mixing the system while the salt forming group (for example, an acidic group) carried by the polymer has been neutralized, removing the solvent, and then obtaining an aqueous dispersion which has been brought to an emulsified or dispersed state.

A dispersed state of particles of the polymer means a state in which even after a solution prepared by dissolving 30 g of the polymer in 70 g of an organic solvent (for example, methyl ethyl ketone), a neutralizing agent which is capable of 100% neutralizing the salt forming group of the polymer (if the salt forming group is anionic, sodium hydroxide; and if the salt forming group is cationic, acetic acid), and 200 g of water are mixed and stirred (apparatus: stirring apparatus equipped with a stirring blade, speed of rotation: 200 rpm, for 30 minutes, 25°C), and then the organic solvent is removed from the mixture liquid, it can be confirmed by visual inspection that the dispersed state stably exists for at least one week at 25°C.

### [Binder for toner]

The binder for toner of the invention contains at least one kind of the polymer derived from dehydroabietic acid, and is constituted to include other components (for example, a resin) as necessary.

The binder for toner can be applied to any of a melt kneading pulverization method, which is a dry method, and a wet method of granulating toner particles in a liquid.

Particularly, since the polymer of the invention has excellent self-dispersibility and dispersion stability, the polymer can be suitably used by a wet method of granulating a toner while keeping the polymer in a dispersed state.

Furthermore, the binder for toner of the invention can contain at least one resin as the other component. As the other resin, for example, a polyester resin other than the polymer derived from dehydroabietic acid (hereinafter, also referred to as "other polyester resin") may be used.

The other polyester resin is a resin obtainable mainly by, for example, a polycondensation between a polyvalent carboxylic acid and a polyhydric alcohol.

Examples of the polyvalent carboxylic acid include aromatic carboxylic acids such as terephthalic acid, isophthalic acid, phthalic anhydride, trimellitic anhydride, pyromellitic acid, and naphthalenedicarboxylic acid; aliphatic carboxylic acids such as maleic anhydride, fumaric acid, succinic acid, alkenylsuccinic anhydride, and adipic acid; and alicyclic carboxylic acids such as cyclohexanedicarboxylic acid, and one kind or two or more kinds of these polyvalent carboxylic acids can be used.

Among these polyvalent carboxylic acids, it is preferable to use an aromatic carboxylic acid. Furthermore, in order to secure satisfactory fixability, it is preferable that the polyester resin adopt a crosslinked structure or a branched structure, and to this end, it is preferable to use a trivalent or higher-valent carboxylic acid (trimellitic acid or acid anhydride thereof, or the like) in combination with a dicarboxylic acid.

Examples of the polyhydric alcohol include aliphatic diols such as ethylene glycol, diethylene glycol, triethylene glycol, propylene glycol, butanediol, hexanediol, neopentyl glycol, and glycerin; alicyclic diols such as cyclohexanediol, cyclohexanedimethanol, and hydrogenated bisphenol A; and aromatic diols such as an ethylene oxide adduct of bisphenol A, and a propylene oxide adduct of bisphenol A. One kind or two or more kinds of these polyhydric alcohols can be used.

Among these polyhydric alcohols, aromatic diols and alicyclic diols are preferred, and among these, aromatic diols are more preferred. Furthermore, in order to secure more satisfactory fixability, it is preferable that a polyester resin adopt a crosslinked structure or a branched structure, and to this end, a polyhydric alcohol having a valence of 3 or higher (glycerin, trimethylolpropane, or pentaerythritol) may be used in combination with a diol, as the polyhydric alcohol.

The glass transition temperature (hereinafter, may be abbreviated to "Tg") of the other polyester resin is preferably from 40°C to 80°C, and more preferably 50°C to 70°C. When the Tg of the polyester resin is 80°C or lower, low temperature fixability is obtained, and when the Tg is 40°C or higher, sufficient heat storage properties and sufficient preservability of fixed images may be obtained.

Furthermore, the molecular weight (weight average molecular weight; weight average molecular weight) of the other polyester resin is preferably from 5,000 to 40,000 from the viewpoints of manufacturability of the resin, fine dispersing of the resin at the time of toner preparation, and a toner which is compatible at the time of melting.

### (Crystalline polyester resin)

The other polyester resin preferably includes at least one crystalline polyester resin. When the polyester resin includes a crystalline polyester resin, the low temperature fixability of the toner becomes more satisfactory. Furthermore, since the heating temperature in the fixing process is low, deterioration of the fixing apparatus is suppressed.

When the polyester resin includes a crystalline polyester resin and a non-crystalline polyester resin, the crystalline polyester resin is compatibilized with the non-crystalline polyester resin at the time of melting, thereby markedly lowering the toner viscosity, and thus a toner having excellent low temperature fixability or image glossiness may be obtained. Furthermore, even among crystalline polyester resins, aliphatic crystalline polyester resins are particularly preferred because many of them have preferable melting points as compared with aromatic crystalline resins.

The content of the crystalline polyester resin in the polyester resin is preferably from 2% by mass to 20% by mass, and more preferably from 2% by mass to 14% by mass. When the content of the crystalline polyester resin is 2% by mass or more, the viscosity of the non-crystalline polyester resin can be sufficiently lowered at the time of melting, and an enhancement of low temperature fixability is likely to be achieved. Furthermore, when the content of the crystalline polyester resin is 20% by mass or less, deterioration of the chargeability of toner, which is attributable to the presence of the crystalline polyester resin, can be suppressed, and therefore, desirable image strength after fixing to a recording medium is likely to be obtained.

The melting point of the crystalline polyester resin is preferably in the range of from 50°C to 100°C, more preferably in the range of from 55°C to 95°C, and even more preferably in the range of from 60°C to 90°C. When the melting point of the crystalline polyester resin is 50°C or higher, satisfactory toner preservability or satisfactory preservability of toner images after fixing may be obtained. Furthermore, when the melting point is 100°C or lower, an enhancement of low temperature fixability may be easily achieved.

Meanwhile, the "crystalline polyester resin" refers to a polyester resin which has not a stepwise change of endothermic energy output but a definite endothermic peak, in a differential scanning calorimetry (hereinafter, may be abbreviated to "DSC"). Furthermore, the crystalline polyester resin is such that in the case of a polymer obtained by copolymerizing another component into the main chain of the polyester resin, if the proportion of the other component is 50% by mass or less, this copolymer is also called a crystalline polyester resin.

The crystalline polyester resin is a product synthesized from an acid component (dicarboxylic acid) and an alcohol (diol) component, and in the following descriptions, the term "acid-derived constituent component" refers to a constituent moiety in the polyester resin, which has been an acid component before the synthesis of the polyester resin, and the term "alcohol-derived constituent component" refers to a constituent moiety which has been an alcohol component before the synthesis of the polyester resin.

### [Acid-derived constituent component]

As the acid which serves as the acid-derived constituent component, various dicarboxylic acids may be used; however, as the acid-derived constituent component in the crystalline polyester resin according to the exemplary embodiment, a linear type aliphatic dicarboxylic acid is desirable.

Examples thereof include, but are not limited to, oxalic acid, malonic acid, succinic acid, glutaric acid, adipic acid, pimellic acid, suberic acid, azelaic acid, sebacic acid, 1,9-nonanedicarboxylic acid, 1,10-decanedicarboxylic acid, 1,11-undecanedicarboxylic acid, 1,12-dodecanedicarboxylic acid, 1,13-tridecanedicarboxylic acid, 1,14-tetradecanedicarboxylic acid, 1,16-hexadecanedicarboxylic acid, 1,18-octadecanedicarboxylic acid, and lower alkyl esters and acid anhydrides thereof. Among these, adipic acid, sebacic acid, and 1,10-decanedicarboxylic acid are preferred when easy availability is considered.

As the acid-derived constituent component, a constituent component such as a constituent component derived from a dicarboxylic acid having a double bond, or a constituent component derived from a dicarboxylic acid having a sulfonic acid group may also be included.

Meanwhile, the unit "composition mol%" according to the present specification refers to the percentage obtainable when the amount of a relevant acid-derived constituent component in the total amount of acid-derived constituent components in the polyester resin, or the amount of a relevant alcohol-constituent component in the total amount of the alcohol-derived constituent components is regarded as one unit (mol).

### [Alcohol-derived constituent component]

As the alcohol which serves as the alcohol-constituent component, aliphatic diols are desirable, and examples thereof include, but are not limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-dodecanediol, 1,12-undecanediol, 1,13-tridecanediol, 1,14-tetradecanediol, 1,18-octadecanediol, and 1,20-eicosanediol. Among these, when easy availability and cost are considered, 1,4-butanediol, 1,6-hexanediol, 1,8-octanediol, 1,9-nonanediol, and 1,10-decanediol are preferred.

The molecular weight (weight average molecular weight) of the crystalline polyester resin is preferably from 8,000 to 40,000, and more preferably from 10,000 to 30,000, from the viewpoints of manufacturability of the resin, fine dispersing of the resin at the time of toner preparation, and a toner which is compatible at the time of melting. When the molecular weight is 8,000 or greater, a decrease in the resistance of the crystalline polyester resin can be suppressed, and therefore, a decrease in chargeability can be prevented. When the molecular weight is 40,000 or less, the cost for resin synthesis is suppressed, and since a decrease in the sharp melting property is prevented, there is no adverse influence on the low temperature fixability.

The binder for toner of the invention may contain a resin other than the other polyester resin. Examples thereof include ethylene-based resins such as polyethylene and polypropylene; styrene-based resins such as polystyrene and α-polymethylstyrene; (meth)acrylic resins such as polymethyl methacrylate and polyacrylonitrile; polyamide resins, polycarbonate resins, polyether resins, and copolymer resins thereof.

The content of the polymer derived from dehydroabietic acid in the binder for toner of the invention is, for example, preferably 10% to 95% by mass, and more preferably 20% to 80% by mass.

### [Toner]

The polymer derived from dehydroabietic acid of the invention can be suitably used, among the composite materials described above, particularly as a binder for toner. The toner of the invention may contain a pigment, a releasing agent, and the polymer derived from dehydroabietic acid of the invention. If necessary, the toner can contain a charge controlling agent, a carrier, an external additive and the like.

For the purpose of enhancing fluidity of the toner or imparting charge control or the like, an inorganic fine powder or organic fine particles may be externally added. For example, silica fine particles or titania fine particles, which have been treated on the surface with an alkyl group-containing coupling agent or the like, are preferably used. Meanwhile, these fine particles preferably have a number average primary particle size of 10 nm to 500 nm, and it is preferable to add the fine particles into the toner in an amount of 0.1% to 20% by mass.

There are no limitations on the pigment, and any of an organic pigment or an inorganic pigment can be used. Examples of the organic pigment include azo pigments, polycyclic pigments, dye chelates, nitro pigments, nitroso pigments, and aniline black. Among these, azo pigments, polycyclic pigments and the like are more preferred. Furthermore, examples of the inorganic pigment include titanium oxide, iron oxide, calcium carbonate, barium sulfate, aluminum hydroxide, barium yellow, cadmium red, chrome yellow, and carbon black. Among these, carbon black is particularly preferred as a black pigment. These are preferably added into the toner in an amount of, for example, 1% to 30% by mass, and more preferably 5% to 20% by mass, and in the case of using a magnetic substance as a black pigment, the magnetic substance is preferably added in an amount of 30% to 85% by mass.

As the binder, the toner may contain the polymer derived from dehydroabietic acid of the invention, and it is more preferable to add the binder into the toner in an amount of, for example, 10% to 95% by mass, and more preferably 20% to 80% by mass. Also, another binder that is generally used can be used in combination. Examples thereof include ethylene-based resins such as polyethylene and polypropylene; styrene-based resins such as polystyrene and α-polymethylstyrene; (meth)acrylic resins such as polymethyl methacrylate and polyacrylonitrile; polyamide resins, polycarbonate resins, polyether resins, and copolymer resins thereof.

Furthermore, the toner may also be constituted by using the binder for toner described above.

As the releasing agent, any releasing agent that is conventionally used for use in toner can all be used. Specific examples include olefins such as low molecular weight polypropylene, low molecular weight polyethylene, and ethylene-propylene copolymers; microcrystalline wax, carnauba wax, Sasol wax, and paraffin wax. The amount of addition of these components is such that it is preferable to add the components into the toner in an amount of, for example, 3% to 20% by mass, and more preferably 5% to 18% by mass.

The charge control agent may be added according to necessity, but in view of color developing properties, a colorless charge control agent is preferred. Examples thereof include compounds having a quaternary ammonium salt structure, compounds having a calixarene structure, and azo complex dyes. The amount of addition of the charge control agent is such that it is preferably to add the charge control agent into the toner in an amount of, for example, 0.5% to 10% by mass, and more preferably 1% to 5% by mass.

As the carrier, any of a non-coated carrier which is composed only of magnetic material particles such as iron ferrite, or a resin-coated carrier composed of magnetic material particles having their surfaces coated with a resin or the like, may be used. The average particle size of this carrier is preferably 30 µm to 150 µm as the volume average particle size.

As the external additive, known particles, such as inorganic particles such as silica particles having hydrophobically treated surfaces, titanium oxide particles, alumina particles, cerium oxide particles, and carbon black; and polymer particles of polycarbonate, polymethyl methacrylate and silicone resins, can be used. Among these, two or more kinds of external additives are used, and it is preferable that at least one of the external additives have an average primary particle size in the range of from 30 nm to 200 nm, and more preferably in the range of from 30 nm to 180 nm.

When the toner is made into small-sized particles, since the non-electrostatic adhesive force to the photoreceptor increases, transfer failure or streak-like image deletion occurs, and this causes the occurrence of irregular transfer in superimposed images or the like. Therefore, transfer properties can be improved by adding a large-sized external additive having an average primary particle size of from 30 m to 200 nm.

If the average primary particle size of the external additive is smaller than 30 nm, the initial fluidity of the toner is satisfactory, but the non-electrostatic adhesive force between the toner and the photoreceptor may not be sufficiently reduced, and the transfer efficiency is decreased. Thus, image deletion may occur, or uniformity of images may be deteriorated. Furthermore, due to the stress exerted inside the developing machine over time, the external additive particles may be embedded at the toner surfaces to cause a change in the chargeability, and problems such as a decrease in the copy density or fogging in the background may occur. If the average primary particle size of the external additive is larger than 200 nm, the external additive is likely to detach from the toner surface, and may cause deterioration of fluidity.

### - Characteristics of toner -

Furthermore, the toner of the invention is such that the average degree of circularity is preferably in the range of from 0.960 to 0.980, and more preferably in the range of from 0.960 to 0.970. In regard to the shape of the toner particles, spherical toner particles are advantageous in view of developability and transfer properties, but spherical toner particles may deteriorate in terms of cleaning properties, as compared with irregularly shaped particles. When the toner particles have a shape in the range described above, transfer efficiency and the compactness of images are enhanced, the formation of high quality images can be carried out, and the cleaning properties of the photoreceptor surface can be increased.

Furthermore, the volume average particle size of the toner of the invention is desirably from 3 µm to 9 µm, more desirably from 3.5 µm to 8.5 µm, and even more desirably from 4 µm to 8 µm. When the volume average particle size is 3 µm or greater, a decrease in the fluidity of the toner is suppressed, and therefore, chargeability of each particle can be easily maintained. Furthermore, the charge distribution does not spread out, fogging in the background is prevented, and overflow of the toner from the developing apparatus does not easily occur. Furthermore, when the volume average particle size of the toner is 3 µm or greater, cleaning properties are improved. When the volume average particle size is 9 µm or less, since a decrease in resolution is suppressed, satisfactory image quality can be obtained, and the demand for high image quality of recent years can be satisfied.

As the particle size distribution index of the toner, the volume average particle size distribution index GSDv is preferably 1.30 or less, more preferably from 1.15 to 1.28, and even more preferably from 1.17 to 1.26. If the GSDv is larger than the range described above, sharpness and resolution of the images may decrease.

Furthermore, it is preferable that the number average particle size distribution index GSDp be 1.30 or less. If the GSDp is larger than the range described above, the proportion of a toner of a small particle size increases, and therefore, electrostatic control may become difficult.

Meanwhile, the volume average particle size D50 is determined such that, for example, for the particle size ranges (channels) partitioned based on the particle size distribution measured with an analyzer such as a COULTER COUNTER TAII or a MULTISIZER-II (manufactured by Beckman Coulter, Inc.), cumulative distribution curves on the basis of volume and number are respectively drawn from the smaller particle size side. The particle sizes at cumulative 16% are defined as volume D16v and number D16P, the particle sizes at cumulative 50% are defined as volume D50v and number D50P, and the particle sizes at cumulative 84% are defined as volume D84v and number D84P, respectively. By using these values, the volume average particle size distribution index (GSDv) is calculated by formula: (D84v/D16v)^{1/2}.

The SF1 is converted into numerical values by mainly analyzing a microscopic image or a scanning electron microscopic (SEM) image by using an image analyzer, and can be calculated, for example, as follows. That is, an optical microscopic image of higher alcohol particles sprayed on a slide glass surface is inputted into a LUZEX image analyzer through a video camera, the maximum lengths and projection areas of 100 particles are determined, and SF1 is obtained by calculating the values of 100 particles by the above-described formula (1) and determining the average value.

### (Method for preparing toner for electrostatic charge development)

The method for preparing a toner according to the invention is not particularly limited, and methods that are conventionally used can be applied. Among them, a method including a step of forming toner particles by a wet preparation method (for example, an aggregation coalescence method, a suspension polymerization method, a dissolution suspension granulation method, a dissolution suspension method, or a dissolution emulsion aggregation coalescence method), and a step of washing the toner particles, is preferred.

As the method for forming toner particles, as described above, wet preparation methods of producing toner particles in a water-based medium are suitable, but particularly an emulsion aggregation method is desirable, while an emulsion aggregation method utilizing a reverse phase emulsification method is more desirable.

The emulsion aggregation method is a method of preparing dispersion liquids (emulsion liquids, pigment dispersion liquids, and the like) each containing the components included in the toner (a binding resin, a colorant and the like), mixing these dispersion liquids, causing the toner components to aggregate with each other to produce aggregate particles, and then heating the aggregate particles at a temperature equal to or higher than the melting point or glass transition temperature of the binding resin, and thereby thermally fusing the aggregate particles.

The emulsion aggregation method can readily produce a toner of a small particle size as compared with a kneading pulverization method, which is a dry method, or other wet methods such as a melt suspension method and a dissolution suspension method, and can easily obtain a toner having a narrow and uniform particle size distribution. Furthermore, the shape control is easy as compared with a melt suspension method, a dissolution suspension method or the like, and a uniform irregular-shaped toner can be produced. Furthermore, the structure of the toner such as film formation is controlled, and in the case where the toner contains a releasing agent or a crystalline polyester resin, since the exposure of these particles to the surface is suppressed, deterioration of the electrostatic properties or preservability is prevented.

Furthermore, when a toner is produced by an emulsion aggregation method by using a binder for toner containing the polymer derived from dehydroabietic acid of the invention, the resin particle stability in the aqueous resin dispersion is satisfactory, and a toner having a small particle size and an excellent particle size distribution is produced.

Meanwhile, for the details of the wet production methods for toner, for example, the methods described in JP-ANos. 2009-229919, 2009-46559 and 2009-151241, Japanese Patent Nos. 3344169 and 3141783 can also be suitably applied to the invention.

There are no particular limitations on the image forming method to which the toner of the invention is applied, but examples include a method of forming an image on a photoreceptor, and then transferring the image to form an image; and a method of transferring the image formed on a photoreceptor sequentially to an intermediate transfer body or the like, forming an image on the intermediate transfer body or the like, subsequently transferring the image onto an image forming member such as paper, and thus forming an image.

### [Plastic modifier]

The polymer derived from dehydroabietic acid of the invention can also be used as a plastic modifier. That is, when the polymer is incorporated into a conventional resin, the resin can be modified. The resin to be modified is not limited, and for example, those resins described above in the section of Composite materials may be used. Specifically, for example, a resin including at least one kind of polycarbonate and polylactic acid is mixed with the polymer derived from dehydroabietic acid of the invention, and thereby, water resistance, tensile strength and the like can be enhanced.

### [Film]

The polymer derived from dehydroabietic acid of the invention can also be used as a film. The film of the invention may contain additives. For example, the additives that are added to the composite materials described above may be appropriately incorporated in accordance with the applications. The thickness of the film may be appropriately determined in accordance with the applications, but for example, the thickness may be about 30 µm to 1,000 µm, and preferably about 50 µm to 500 µm. The film of the invention is satisfactory in terms of water resistance or the like, for example, as compared with naturally derived resins such as polylactic acid.

### [Hot melt adhesive]

The polymer derived from dehydroabietic acid of the invention can also be used as a hot melt adhesive. The hot melt adhesive of the invention may also contain additives. For example, the additives that are added to the composite materials described above may be appropriately incorporated in accordance with the applications. The adhesive of the invention is useful because the adhesive has an effect to an equal extent in terms of adhesive strength, as compared with known petroleum-derived adhesives (for example, an ethylene-vinyl acetate polymer).

### [Thermoplastic elastomer]

The polymer derived from dehydroabietic acid of the invention can also be used as a thermoplastic elastomer. In the elastomer of the invention, for example, the additives and the like that are incorporated into the composite materials described above may be appropriately incorporated in accordance with the applications. The thermoplastic elastomer of the invention has satisfactory rubber elasticity even as a simple substance, and is useful in view of molding processing at a relatively low temperature (for example, about 100°C).

### EXAMPLES

Hereinafter, the invention will be described in more detail by way of Examples, but the invention is not intended to be limited to the following Examples.

### Synthesis Example of monomer derived from dehydroabietic acid (DHA-1 to DHA-12)

In the following Synthesis Examples for the monomers derived from dehydroabietic acid, the structure of the synthesized monomer was confirmed by using ¹H-NMR and liquid chromatography in all cases.

### (Synthesis Example 1)

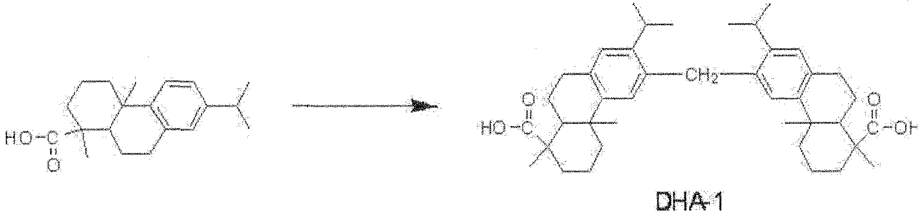

Sulfuric acid (30 ml) was added dropwise to acetic acid (100 ml) under ice cooling. Subsequently, dehydroabietic acid (manufactured by Arakawa Chemical Industries, Ltd., 30.0 g) and para-formaldehyde (2.1 g) were added thereto at room temperature, and the mixture was stirred for 3 hours at 40°C. The reaction liquid was poured into 1 liter (1) of cold water, and the mixture was extracted with ethyl acetate. The extraction liquid was washed with water until the washing liquid became almost neutral, and dried over anhydrous magnesium sulfate. Subsequently, the solvent was distilled off under reduced pressure. 80 ml of methanol was added to the residue, and white crystals were collected by filtration and dried. Thus, DHA-1 (19.8 g) was obtained.

### (Synthesis Example 2)

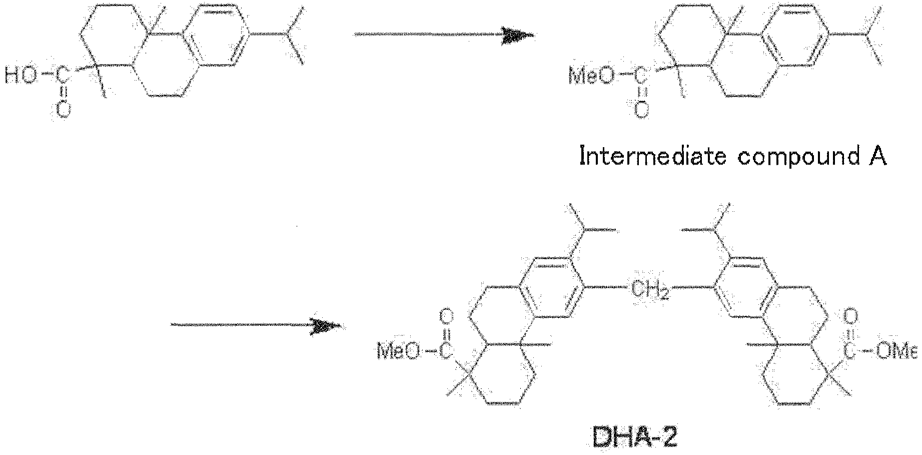

Oxalyl chloride (13 g) was added dropwise at room temperature to a mixture of dehydroabietic acid (30.0 g) and methylene chloride (60 ml). After the mixture was stirred for 3 hours, the solvent was distilled off under reduced pressure, and 16 g of methanol was added dropwise thereto. The mixture was stirred for 3 hours at room temperature, and then excess methanol was distilled off under reduced pressure. Thus, an intermediate compound A (31 g) was obtained.

The intermediate compound A (31 g) and para-formaldehyde (2.1 g) were added to methylene chloride (150 ml), and sulfuric acid (50 ml) was added dropwise thereto at 10°C to 15°C. After the dropwise addition, the mixture was stirred for 5 hours at room temperature, subsequently 500 ml of ice water was added thereto, and the organic layer was separated. The organic layer was washed with water until the washing liquid became neutral, and then dried over anhydrous magnesium sulfate, and methylene chloride was distilled off. 50 ml of methanol was added to the residue, the mixture was stirred for 3 hours at room temperature, and then white crystals were collected by filtration and dried. Thus, DHA-2 (20.2 g) was obtained.

### (Synthesis Example 3)

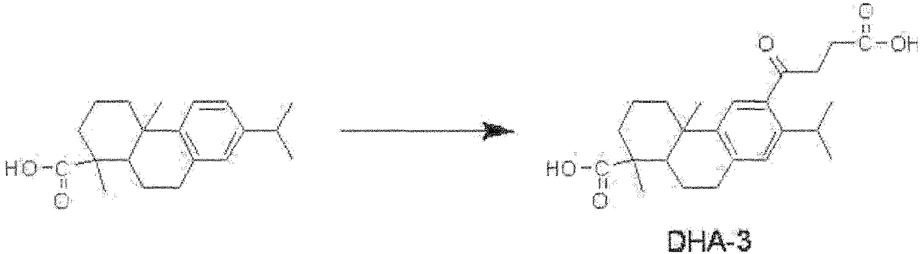

Dehydroabietic acid (75 g) and succinic anhydride (38 g) were dissolved in methylene chloride (1 L), and anhydrous aluminum chloride (130 g) was added to the solution in small portions under ice cooling. The mixture was stirred for 2 hours at 10°C to 15°C, and then the reaction liquid was poured into ice water. White crystals thus produced were collected by filtration, washed with water, and further washed with methanol. Thus, DHA-3 (72 g) was obtained.

### (Synthesis Example 4)

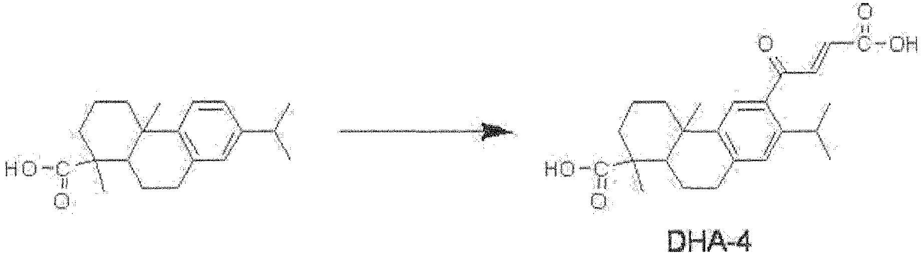

DHA-4 (70 g) was obtained in the same manner as in Synthesis Example 3, except that succinic anhydride was changed to maleic anhydride (37 g).

### (Synthesis Example 5)

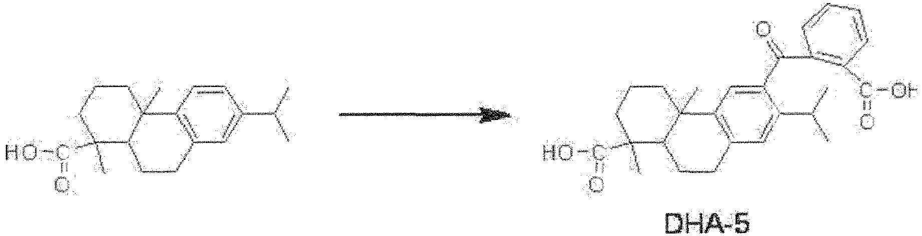

Dehydroabietic acid (29 g) and phthalic anhydride (15 g) were added to 1,2-dichloroethane (100 ml) that had been cooled to 10°C or lower, and while the mixture was stirred, aluminum chloride (33 g) was added thereto in divided portions. Thereafter, the mixture was stirred for 2 hours at room temperature, and a solution thus obtained was poured into a mixture of 100 g of concentrated hydrochloric acid and 100 g of ice while the mixture was stirred. Furthermore, saturated brine was added thereto, an extraction operation was carried out, and an organic layer was separated. The organic layer was concentrated, and then purification was carried out by silica gel column chromatography using a mixed solvent of ethyl acetate and hexane. White crystals were collected by filtration and dried. Thus, DHA-5 (41 g) was obtained.

### (Synthesis Example 6)

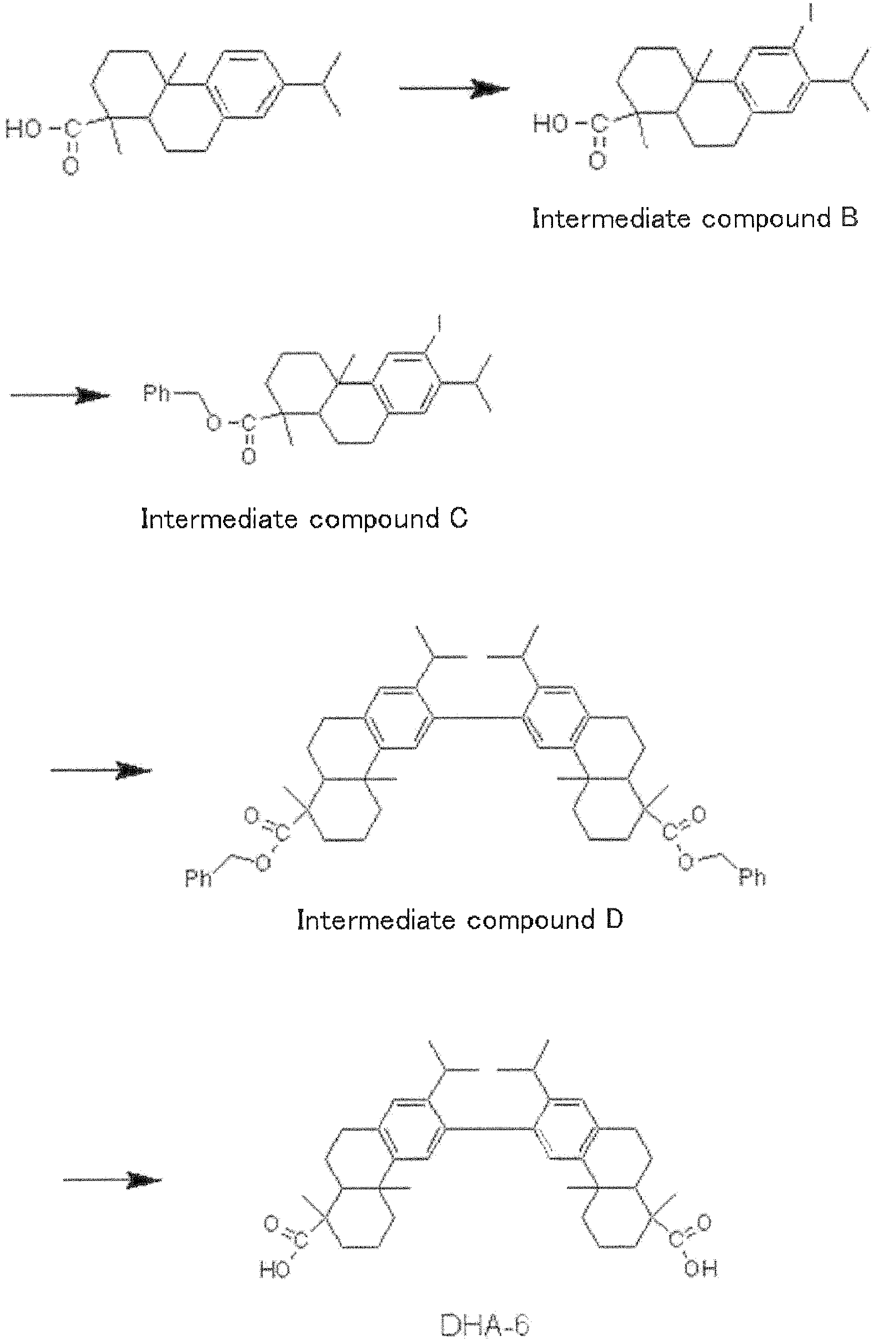

Dehydroabietic acid (140 g) was introduced into a 1-liter (1) three-necked flask equipped with a cooling tube, and was dissolved in acetic acid (450 ml). Ortho-periodic acid dihydrate (20 g) and iodine (93 g) were added to the reaction system. Thereafter, concentrated sulfuric acid (15 mL)/water (90 mL) was added dropwise to the reaction system, and the mixture was stirred for 5 hours at 60°C. After the reaction solution was left to cool, the reaction solution was administered into water, and the mixture was stirred for one hour and then filtered. A residue thus obtained was washed with running methanol, and thus an intermediate compound B (130 g) was obtained.

Subsequently, the intermediate B (27 g) was introduced into a 200-ml three-necked flask equipped with a cooling tube, and was dissolved in N,N-dimethylacetamide (60 ml). Potassium carbonate (11 g) was added to the reaction system, subsequently benzyl chloride (8.4 g) was added dropwise, and the mixture was stirred for 3 hours at 50°C. After the reaction liquid was left to cool, the reaction liquid was added to water, and the mixture was extracted with ethyl acetate and partitioned. Subsequently, the organic layer was washed with saturated brine and dried over magnesium sulfate. The solvent was distilled off under reduced pressure, and then the concentrate residue was washed with running methanol. Thus, an intermediate compound C (29 g) was obtained.

Subsequently, the intermediate compound C (22 g) was introduced into a 500-ml three-necked flask equipped with a cooling tube, and was dissolved in hexamethyl phosphate triamide (200 ml). Dichlorobis(triphenylphosphine)nickel(II) (28 g), tricyclohexylphosphine (1.18 g), potassium iodide (7.0 g), and zinc (6.3 g) were added to the reaction system, and then the reaction system was stirred for 5 hours at 60°C. After the reaction solution was left to cool, the reaction solution was added to dilute hydrochloric acid, and the mixture was extracted with ethyl acetate and filtered through Celite. Subsequently, the filtrate was partitioned, and the organic layer was washed with a saturated aqueous solution of sodium hydrogen carbonate and saturated brine and dried over magnesium sulfate. The solvent was distilled off under reduced pressure, and then the concentrate residue was purified by silica gel column chromatography. Thus, an intermediate compound D (6.5 g) was obtained.

The intermediate compound D (2.8 g) thus obtained was placed in a 200-ml autoclave, and was dissolved in tetrahydrofuran (60 ml). 10% Pd-C (0.3 g) was added to the reaction system, and the reaction system was stirred for 12 hours at 60°C at a hydrogen pressure of 5 MPa. After the reaction liquid was left to cool, the reaction liquid was filtered, and the solvent was removed. Subsequently, the residue was washed with running methanol, and thus DHA-6 (2.1 g) which is a dicarboxylic acid compound was obtained.

### (Synthesis Example 7)

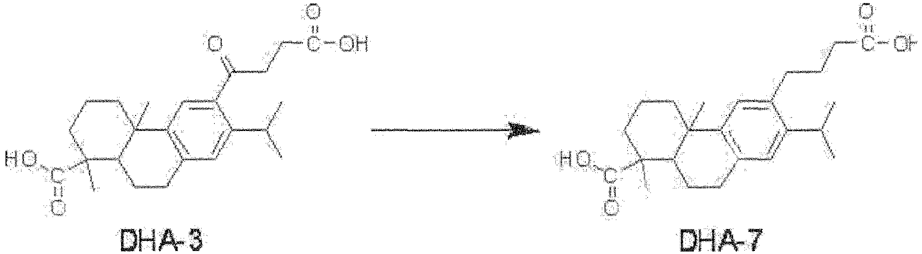

A mixture of DHA-3 (20 g), hydrous hydrazine (9.6 g), sodium hydroxide (12 g), and diethylene glycol (100 mL) was slowly heated to 220°C while the water produced therefrom was distilled off. Furthermore, the mixture was heated and stirred for 4 hours at 230°C and then left to cool. The mixture was acidified with dilute hydrochloric acid, and a white precipitate thus produced was collected by filtration, washed with water, and dried. Thus, DHA-7 (18 g) was obtained.

### (Monomer Synthesis Example 8)

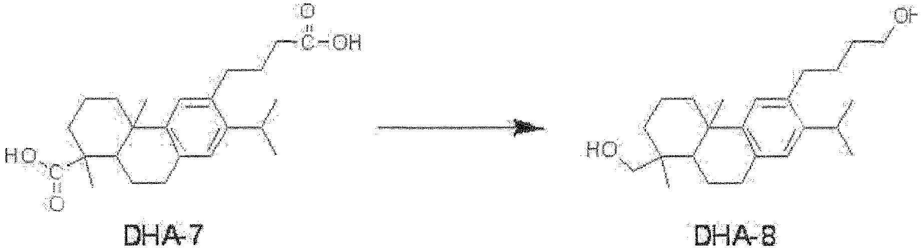

In a nitrogen atmosphere, DHA-7 (13 g) was introduced into a 200-ml three-necked flask, and was dissolved in dehydrated tetrahydrofuran (30 ml). A hydrogenated bis(2-methoxyethoxy)aluminum sodium toluene solution (about 70%, 24 g) was added dropwise to the reaction system at 15°C to 20°C, and then the mixture was stirred for 3 hours at room temperature. The reaction solution was added to dilute hydrochloric acid, and the mixture was extracted with ethyl acetate and partitioned. The organic layer was washed with water, and dried over magnesium sulfate. The solvent was distilled off under reduced pressure, and then the concentrate residue was purified by silica gel column chromatography. Thus, DHA-8 (10.5 g) was obtained.

### (Synthesis Example 9)

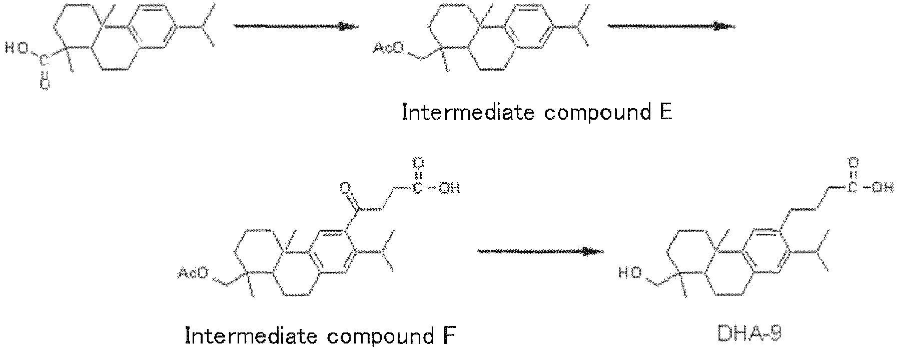

In a nitrogen atmosphere, dehydroabietic acid (12 g) was introduced into a 200-ml three-necked flask, and was dissolved in dehydrated tetrahydrofuran (30 ml). A hydrogenated bis(2-methoxyethoxy)aluminum sodium toluene solution (about 70%) (4.1 g) was added dropwise to the reaction system at 15°C to 20°C, and then the mixture was stirred for 3 hours at room temperature. The reaction solution was added to dilute hydrochloric acid, and the mixture was extracted with ethyl acetate and partitioned. The organic layer was washed with water, and dried over magnesium sulfate. The solvent was distilled off under reduced pressure, and then the concentrate residue (12 g) was introduced into a 200-ml three-necked flask and dissolved in ethyl acetate (30 ml). Pyridine (3.8 g) was added to the solution, and acetyl chloride (3.8 g) was added dropwise thereto at 15°C to 20°C. Subsequently, the resulting mixture was stirred for one hour at room temperature. The reaction solution was filtered, and the filtrate was washed with water and dried over magnesium sulfate. The solvent was distilled off under reduced pressure, and then the concentrate residue was purified by silica gel column chromatography. Thus, an intermediate compound E (11 g) was obtained.

Subsequently, the intermediate compound E (10 g) and succinic anhydride (4.5 g) were introduced into a 500-ml three-necked pear-shaped flask, and the compounds were dissolved in methylene chloride (50 ml). Anhydrous aluminum chloride (14 g) was added to the reaction system in small portions at 10°C to 15°C. The reaction liquid was stirred for 3 hours at room temperature, and then was added to ice water. The mixture was extracted with methylene chloride and partitioned, and the organic layer was washed with water and dried over magnesium sulfate. The solvent was distilled off under reduced pressure, and then the concentrate residue was purified by silica gel column chromatography. Thus, an intermediate compound F (11 g) was obtained.

Subsequently, the intermediate compound F (10 g) was introduced into a 500-ml pear-shaped flask equipped with a Dean-Stark trap, and was dissolved in diethylene glycol (30 ml). Hydrazine monohydrate (4.0 ml) and potassium hydroxide (4.3 g) were added to the reaction system, and then the temperature of the mixture was increased stepwise to 60°C to 220°C. The reaction liquid was stirred for 5 hours while water was distilled off. After the reaction solution was left to cool, the reaction solution was added to dilute hydrochloric acid, and the mixture was extracted with ethyl acetate and partitioned. The organic layer was washed with water and dried over magnesium sulfate. The solvent was distilled off under reduced pressure, and then the concentrate residue was purified by silica gel column chromatography. Thus, DHA-9 (7.0 g) was obtained.

### (Synthesis Example 10)

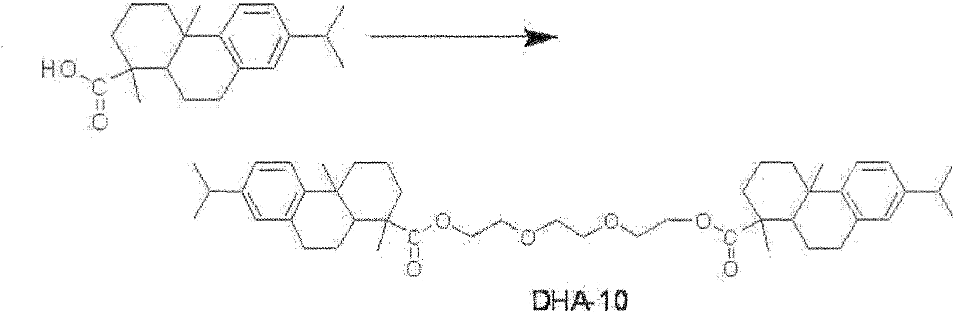

60 g of dehydroabietic acid was dissolved in 160 ml of methylene chloride, and 27.0 g of oxalyl chloride was added dropwise thereto at room temperature. The mixture was stirred for 3 hours at room temperature, and then methylene chloride and excess oxalyl chloride were distilled off. 100 ml of methylene chloride and 15 g of triethylene glycol were added to the residue, and 30 ml of pyridine was added dropwise to the mixture under ice cooling. The mixture was further stirred for 3 hours at room temperature, and then the reaction liquid was poured into cold dilute hydrochloric acid. The mixture was extracted with ethyl acetate, and the extract was washed with water and dried. Subsequently, ethyl acetate was distilled off under reduced pressure, and thus DHA-10 (71 g) was obtained as a colorless viscous liquid.

### (Synthesis Example 11)

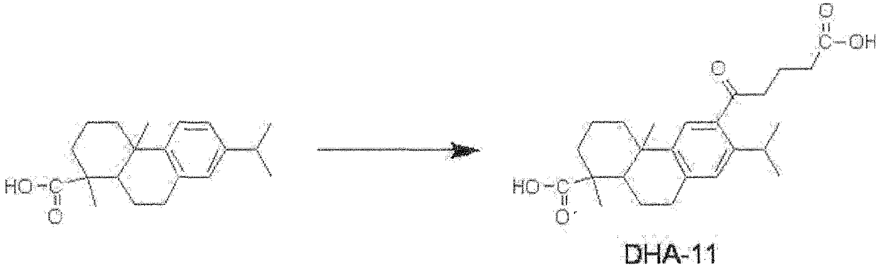

Dehydroabietic acid (75 g) and glutaric anhydride (43 g) were dissolved in methylene chloride (1 L), and under ice cooling, anhydrous aluminum chloride (130 g) was added thereto in small portions. The mixture was stirred for 3 hours at 12°C to 15°C, and then the reaction liquid was poured into ice water. White crystals thus produced were collected by filtration, washed with water, and then further washed with methanol. Thus, DHA-11 (71 g) was obtained.

### (Synthesis Example 12)

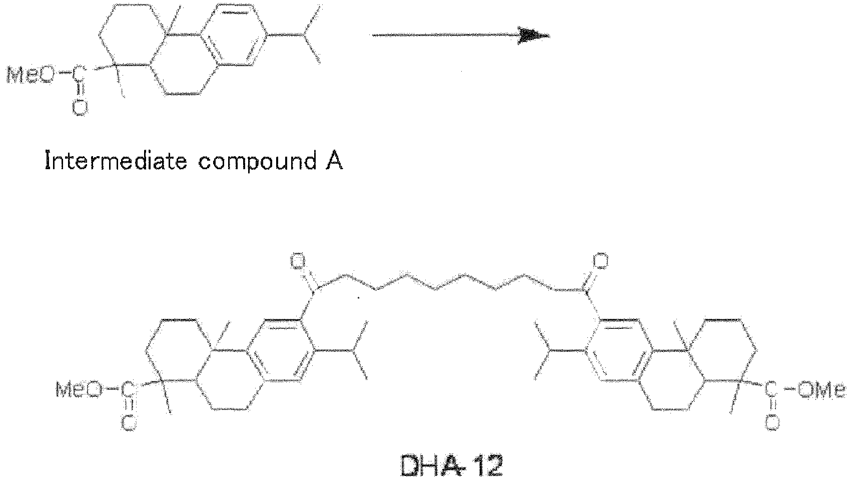

The intermediate compound A (63 g) obtained in Synthesis Example 2 and sebacic acid dichloride (25 g) were dissolved in 500 mL of methylene chloride, and anhydrous aluminum chloride (53 g) was added thereto in small portions under ice cooling. The mixture was stirred for 2 hours at 10°C to 15°C, and then the reaction liquid was poured into ice water. The mixture was extracted with 500 ml of ethyl acetate. The extract was washed with water and dried, and then ethyl acetate was distilled off under reduced pressure to obtain a colorless liquid. The colorless liquid was purified by column chromatography, and thus DHA-12 (4.6 g) was obtained.

### Synthesis Example for polymer derived from dehydroabietic acid (P-1 to P-26)

### (Polymerization Example)

In the following Synthesis Example for the polymer derived from dehydroabietic acid, the structure of the synthesized polymer was confirmed by using ¹H-NMR in all cases. Furthermore, the weight average molecular weight and molecular weight distribution (weight average molecular weight/number average molecular weight) of the polymer were measured by conventional methods using GPC. Furthermore, the glass transition point was measured by a conventional method using a differential scanning calorimeter (manufactured by SII Nano Technology, Inc., DSC6200). In addition, the acid value was measured by a method described in the JIS standard (JIS K 0070:1992).

The property values of the polymer thus obtained are presented in Table 1.

### (Polymerization Example 1)

A mixture of DHA-1 (15 g), triethylene glycol (3.8 g) and ethyl ortho-titanate (0.06 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 3 hours, without any change applied to the system. The reaction product thus obtained was taken out in a heat resistant container produced by processing TEFLON (registered trademark), and thus a polymer P-1 (weight average molecular weight: 10,100, molecular weight distribution: 2.0, glass transition point: 56°C, and acid value: 10 mg KOH/g) was obtained.

### (Polymerization Example 2)

A mixture of DHA-1 (15 g), triethylene glycol (3.8 g), and ethyl ortho-titanate (0.06 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 6 hours, without any change applied to the system. The reaction product thus obtained was taken out in a heat resistant container produced by processing TEFLON (registered trademark), and thus a polymer P-2 (weight average molecular weight = 34,000, molecular weight distribution: 4.7, glass transition point: 78°C, acid value: 9 mg KOH/g) was obtained.

### (Polymerization Example 3)

A mixture of DHA-1 (15 g), triethylene glycol (3.8 g), and ethyl ortho-titanate (0.06 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 1 hour, without any change applied to the system. The reaction product thus obtained was taken out in a heat resistant container produced by processing TEFLON (registered trademark), and thus a polymer P-3 (weight average molecular weight = 4,700, molecular weight distribution: 1.4, glass transition point: 45°C, acid value: 18 mg KOH/g) was obtained.

### (Polymerization Example 4)

A mixture of DHA-1 (15 g), triethylene glycol (3.5 g), and ethyl ortho-titanate (0.06 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 4 hours, without any change applied to the system. The reaction product thus obtained was taken out in a heat resistant container produced by processing TEFLON (registered trademark), and thus a polymer P-4 (weight average molecular weight = 8,400, molecular weight distribution: 2.1, glass transition point: 51°C, acid value: 38 mg KOH/g) was obtained.

### (Polymerization Example 5)

A mixture of DHA-2 (20 g), triethylene glycol (14 g), and ethyl ortho-titanate (0.07 g) was heated and stirred for one hour at 240°C under a nitrogen gas stream, and methanol produced therefrom was distilled off. Subsequently, the temperature was slowly lowered to 180°C, and excess triethylene glycol was distilled off under reduced pressure. Furthermore, while the triethylene glycol produced along with the progress of polymerization was distilled off, the reaction system was heated and stirred for 2 hours, without any change applied to the system. Subsequently, fumaric acid (2.2 g) was added thereto, and under reduced pressure, the mixture was heated and stirred for one hour at 200°C. The reaction product thus obtained was taken out in a heat resistant container produced by processing TEFLON (registered trademark), and thus a polymer P-5 (weight average molecular weight = 15,500, molecular weight distribution: 4.8, glass transition point: 57°C, acid value: 14 mg KOH/g) was obtained.

### (Polymerization Example 6)

A mixture of DHA-3 (20 g), 1,6-hexanediol (5.9 g), and ethyl ortho-titanate (0.11 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 3 hours, without any change applied to the system. The reaction product thus obtained was taken out in a heat resistant container produced by processing TEFLON (registered trademark), and thus a polymer P-6 (weight average molecular weight = 11,300, molecular weight distribution: 3.9, glass transition point: 52°C, acid value: 10 mg KOH/g) was obtained.

### (Polymerization Example 7)

DHA-3 (120 g), 1,6-dibromohexane (73 g), potassium carbonate (45 g), and dimethylacetamide (450 ml) were weighed, and the mixture was stirred for 5 hours at 60°C. The temperature of the reaction system was cooled to room temperature, subsequently the reaction solution was thrown into 5 L of water under vigorous stirring, and a white solid was thereby precipitated out. The white solid thus obtained was separated by suction filtration, and the filter cake was washed 5 times with a large amount of water and then dried in a vacuum at 80°C for 6 hours. Thus, a polymer P-7 (weight average molecular weight = 12,500, molecular weight distribution: 4.8, glass transition point: 54°C, and acid value: 12 mg KOH/g) was obtained.

### (Polymerization Example 8)

A polymer P-8 (weight average molecular weight = 13,400, molecular weight distribution: 3.3, glass transition point: 54°C, and acid value: 13 mg KOH/g) was obtained in the same manner as in Polymerization Example 7, except that DHA-3 of Polymerization Example 7 was changed to DHA-4.

### (Polymerization Example 9)

A mixture of DHA-5 (20 g), 1,10-decanediol (8.7 g), and ethyl ortho-titanate (0.11 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 3 hours, without any change applied to the system. The reaction product thus obtained was taken out in a heat resistant container produced by processing TEFLON (registered trademark), and thus a polymer P-9 (weight average molecular weight: 17,000, molecular weight distribution: 3.2, glass transition point: 61 °C, acid value: 9 mg KOH/g) was obtained.

### (Polymerization Example 10)

A polymer P-10 (weight average molecular weight = 14,700, molecular weight distribution: 3.4, glass transition point: 58°C, and acid value: 15 mg KOH/g) was obtained in the same manner as in Polymerization Example 9, except that DHA-6 (30 g) was used instead of DHA-5.

### (Polymerization Example 11)

A mixture of DHA-8 (20 g), adipic acid (8.2 g), and ethyl ortho-titanate (0.13 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 3 hours, without any change applied to the system. The reaction product thus obtained was taken out in a heat resistant container produced by processing TEFLON (registered trademark), and thus a polymer P-11 (weight average molecular weight: 17,100, molecular weight distribution: 3.9, glass transition point: 59°C, acid value: 8 mg KOH/g) was obtained.

### (Polymerization Example 12)

A mixture of DHA-9 (20 g), 4-n-hydroxybutanoic acid (8.4 g), and ethyl ortho-titanate (0.08 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 3 hours, without any change applied to the system. The reaction product thus obtained was taken out in a heat resistant container produced by processing TEFLON (registered trademark), and thus a polymer P-12 (weight average molecular weight: 19,000, molecular weight distribution: 3.4, glass transition point: 58°C, acid value: 20 mg KOH/g) was obtained.

### (Polymerization Example 13)

DHA-10 (46 g) and para-formaldehyde (2.3 g) were added to trifluoroacetic acid (80 ml), and the mixture was stirred for 5 hours at room temperature. Subsequently, glyoxylic acid monohydrate (4.6 g) was added thereto, and the mixture was stirred for another 2 hours at room temperature. After the reaction, most of trifluoroacetic acid was distilled off, and the reaction liquid was poured into ice water and extracted with ethyl acetate. The extract was sufficiently washed with water, and then was dried over anhydrous magnesium sulfate. The solvent was distilled off under reduced pressure. Furthermore, remaining ethyl acetate was completely removed by reducing the pressure with a vacuum pump under heating, and thus a polymer P-13 (weight average molecular weight = 8,900, molecular weight distribution: 2.0, glass transition point: 49°C, and acid value: 6 mg KOH/g) was obtained.

### (Polymerization Example 14)

A mixture of DHA-2 (20 g), adipic acid (2.0 g), tetraethylene glycol (9.1 g), and ethyl ortho-titanate (0.14 g) was heated and stirred for 1.5 hours at 240°C under a nitrogen gas stream, and water and methanol produced therefrom were distilled off. Subsequently, while the water and methanol produced along with the progress of polymerization were distilled off under reduced pressure, the reaction system was heated and stirred for one hour at 220°C. Again, the interior of the system was filled with nitrogen, and under a nitrogen gas stream, the reaction temperature was lowered to 160°C. Trimellitic anhydride (0.69 g) was added to the system, and the mixture was heated and stirred for one hour, without any change applied to the system. The reaction product thus obtained was taken out in a heat resistant container produced by processing TEFLON (registered trademark), and thus a polymer P-14 (weight average molecular weight: 14,800, molecular weight distribution: 3.2, glass transition point: 53°C, acid value: 18 mg KOH/g) was obtained.

### (Polymerization Example 15)

A mixture of DHA-2 (20 g), sebacic acid (1.6 g), tetraethylene glycol (8.0 g), and ethyl ortho-titanate (0.14 g) was heated and stirred for 1.5 hours at 240°C under a nitrogen gas stream, and water and methanol produced therefrom were distilled off. Subsequently, while the water and methanol produced along with the progress of polymerization were distilled off under reduced pressure, the reaction system was heated and stirred for one hour at 220°C. Again, the interior of the system was filled with nitrogen, and under a nitrogen gas stream, the reaction temperature was lowered to 160°C. Trimellitic anhydride (0.60 g) was added to the system, and the mixture was heated and stirred for one hour, without any change applied to the system. The reaction product thus obtained was taken out in a heat resistant container produced by processing TEFLON (registered trademark), and thus a polymer P-15 (weight average molecular weight: 15,000, molecular weight distribution: 3.3, glass transition point: 50°C, acid value: 13 mg KOH/g) was obtained.

### (Polymerization Example 16)

A mixture of DHA-1 (20 g), succinic acid (1.1 g), triethylene glycol (7.0 g), dodecenylsuccinic anhydride (1.2 g), and ethyl ortho-titanate (0.14 g) was heated and stirred for 1.5 hours at 240°C under a nitrogen gas stream, and water produced therefrom was distilled off. Subsequently, while the water produced along with the progress of polymerization was distilled off under reduced pressure, the reaction system was heated and stirred for one hour at 220°C. Again, the interior of the system was filled with nitrogen, and under a nitrogen gas stream, the reaction temperature was lowered to 160°C. Trimellitic anhydride (0.72 g) was added to the system, and the mixture was heated and stirred for one hour, without any change applied to the system. The reaction product thus obtained was taken out in a heat resistant container produced by processing TEFLON (registered trademark), and thus a polymer P-16 (weight average molecular weight: 16,200, molecular weight distribution: 3.1, glass transition point: 53°C, acid value: 13 mg KOH/g) was obtained.

### (Polymerization Example 17)

A mixture of DHA-3 (40 g), succinic anhydride (20 g), citric acid (2.5 g), ethyl ortho-titanate (0.46 g), and 1,3-propanediol (38 g) was heated and stirred for 5 hours at 180°C under a nitrogen gas stream, and water produced therefrom was distilled off. Subsequently, excess propanediol was distilled off under reduced pressure, the temperature was slowly elevated to 250°C, and thus propanediol produced therefrom was distilled off. The system was heated for 5 hours at 250°C, and after the distillation of propanediol was completed, the reaction liquid was cooled to 70°C. 200 ml of tetrahydrofuran was added thereto, and the mixture was heated and dissolved. The solution was poured into 1 L of methanol to induce reprecipitation, and thus a polymer P-17 (weight average molecular weight = 15,000, molecular weight distribution: 3.1, glass transition point: 59°C, and acid value: 14 mg KOH/g) was obtained.

### (Polymerization Example 18)

A mixture of DHA-3 (40 g), dimethyl succinate (15 g), ethyl ortho-titanate (0.46 g), and 1,3-propanediol (38 g) was heated and stirred for 5 hours at 180°C under a nitrogen gas stream, and water and methanol produced therefrom were distilled off. Subsequently, excess propanediol was distilled off under reduced pressure, the temperature was slowly elevated to 260°C, and the propanediol thus produced was distilled off. The system was heated for 5 hours at 265°C, and after the distillation of propanediol was completed, the reaction liquid was cooled to 70°C. 200 ml of tetrahydrofuran was added thereto, and the mixture was heated and dissolved. The solution was poured into 1 L of methanol to induce reprecipitation, and thus a copolymer P-18 (weight average molecular weight = 42,000, molecular weight distribution: 3.5, glass transition point: 52°C, and acid value: 3 mg KOH/g) was obtained.

### (Polymerization Example 19)

A mixture of DHA-3 (40 g), 1,4-butanediol (27 g), and ethyl ortho-titanate (0.46 g) was heated and stirred for 5 hours at 180°C under a nitrogen gas stream, and water produced therefrom was distilled off. Subsequently, excess butanediol was distilled off under reduced pressure, the temperature was slowly elevated to 260°C, and the butanediol thus produced was distilled off. The system was heated for 3 hours at 260°C, and after the distillation of butanediol was completed, the reaction liquid was cooled to 70°C. 200 ml of tetrahydrofuran was added thereto, and the mixture was heated and dissolved. The solution was poured into 1 L of methanol to induce reprecipitation, and thus a polymer P-19 (weight average molecular weight = 64,000, molecular weight distribution: 5.1, and glass transition point: 68°C) was obtained.

### (Polymerization Example 20)

A mixture of DHA-11 (42 g), 1,3-propanediol (20 g), and ethyl ortho-titanate (0.46 g) was heated and stirred for 5 hours at 180°C under a nitrogen gas stream, and water produced therefrom was distilled off. Subsequently, excess propanediol was distilled off under reduced pressure, the temperature was slowly elevated to 260°C, and the propanediol thus produced was distilled off. The system was heated for 4 hours at 260°C to 265°C, and after the distillation of propanediol was completed, the reaction liquid was cooled to 70°C. 200 ml of tetrahydrofuran was added thereto, and the mixture was heated and dissolved. The solution was poured into 1 L of methanol to induce reprecipitation, and thus a polymer P-20 (weight average molecular weight = 58,000, molecular weight distribution: 5.4, and glass transition point: 64°C) was obtained.

### (Polymerization Example 21)

A mixture of DHA-7 (19 g), 1,4-butanediol (27 g), and ethyl ortho-titanate (0.46 g) was heated and stirred for 5 hours at 180°C under a nitrogen gas stream, and water produced therefrom was distilled off. Subsequently, excess butanediol was distilled off under reduced pressure, the temperature was slowly elevated to 260°C, and the butanediol thus produced was distilled off. The system was heated for 4 hours at 265°C, and after the distillation of butanediol was completed, the reaction liquid was cooled to 70°C. 200 ml of tetrahydrofuran was added thereto, and the mixture was heated and dissolved. The solution was poured into 1 L of methanol to induce reprecipitation, and thus a polymer P-21 (weight average molecular weight = 72,000, molecular weight distribution: 4.9, and glass transition point: 52°C) was obtained.

### (Polymerization Example 22)

A mixture of DHA-12 (24 g), 1,3-propanediol (23 g), and ethyl ortho-titanate (0.46 g) was heated and stirred for 5 hours at 180°C under a nitrogen gas stream, and methanol produced therefrom was distilled off. Subsequently, excess propanediol was distilled off under reduced pressure, the temperature was slowly elevated to 260°C, and the propanediol thus produced was distilled off. The system was heated for 5 hours at 265°C, and after the distillation of propanediol was completed, the reaction liquid was cooled to 70°C. 200 ml of tetrahydrofuran was added thereto, and the mixture was heated and dissolved. The solution was poured into 1 L of methanol to induce reprecipitation, and thus a polymer P-22 (weight average molecular weight = 51,000, molecular weight distribution: 3.9, and glass transition point: 59°C) was obtained.

### (Polymerization Example 23)

A mixture of DHA-7 (39 g), dimethyl sebacate (23 g), ethyl ortho-titanate (0.46 g), and 1,3-propanediol (38 g) was heated and stirred for 5 hours at 180°C under a nitrogen gas stream, and water and methanol produced therefrom were distilled off. Subsequently, excess propanediol was distilled off under reduced pressure, the temperature was slowly elevated to 260°C, and the propanediol thus produced was distilled off. The system was heated for 5 hours at 265°C, and after the distillation of propanediol was completed, the reaction liquid was cooled to 70°C. 300 ml of ethyl acetate was added thereto, and the mixture was heated and dissolved. The solution was poured into 1 L of methanol to induce reprecipitation, and thus a copolymer P-23 (weight average molecular weight = 46,000, molecular weight distribution: 3.2, and glass transition point: -5°C) was obtained.

### (Polymerization Example 24)

A mixture of DHA-2 (20 g), dodecenylsuccinic anhydride (2.08 g), tetraethylene glycol (7.80 g), and ethyl ortho-titanate (0.07 g) was heated and stirred for 2 hours at 240°C under a nitrogen gas stream, and water and methanol produced therefrom were distilled off. Subsequently, the reaction temperature was decreased to 170°C over one hour, trimellitic anhydride (0.56 g) was added thereto, and the reaction was continued for another one hour. The reaction product thus obtained was taken out in a heat resistant container produced by processing TEFLON (registered trademark), and thus a polymer P-24 (weight average molecular weight = 13,000, molecular weight distribution: 3.4, glass transition point: 53°C, and acid value: 13 mg KOH/g) was obtained.

### (Polymerization Example 25)

A mixture of DHA-2 (20 g), sebacic acid (2.7 g), decanediol (8.0 g), and ethyl ortho-titanate (0.10 g) was heated and stirred for 50 minutes at 240°C under a nitrogen gas stream, and water and methanol produced therefrom were distilled off. Subsequently, the reaction temperature was decreased to 170°C over one hour, trimellitic anhydride (0.51 g) was added thereto, and the reaction was continued for another one hour. The reaction product thus obtained was taken out in a heat resistant container produced by processing TEFLON (registered trademark), and thus a polymer P-25 (weight average molecular weight = 17,700, molecular weight distribution: 3.3, glass transition point: 51 °C, and acid value: 12 mg KOH/g) was obtained.

### (Polymerization Example 26)

A mixture of DHA-2 (20 g), dodecenylsuccinic anhydride (3.56 g), triethylene glycol (5.55 g), tetraethylene glycol (1.73 g), and ethyl ortho-titanate (0.06 g) was heated and stirred for 2 hours at 240°C under a nitrogen gas stream, and water and methanol produced therefrom were distilled off. Subsequently, the reaction temperature was decreased to 170°C over one hour, trimellitic anhydride (0.56 g) was added thereto, and the reaction was continued for another one hour. The reaction product thus obtained was taken out in a heat resistant container produced by processing TEFLON (registered trademark), and thus a polymer P-26 (weight average molecular weight = 15,000, molecular weight distribution: 3.3, glass transition point: 56°C, and acid value: 13 mg KOH/g) was obtained.

### (Comparative Polymerization Example 1)

A mixture of glycerin (29 g), isophthalic acid (33 g), disproportionated rosin (150 g), and tetra-n-butyl titanate (0.17 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 8 hours, without any change applied to the system. The reaction product thus obtained was taken out in a heat resistant container produced by processing TEFLON (registered trademark), and thus a polymer H-1 (weight average molecular weight: 26,100, molecular weight distribution: 9.3, glass transition point: 52°C, and acid value: 14 mg KOH/g) was obtained.

The polymer H-1 thus obtained did not contain a skeleton derived from dehydroabietic acid in the main chain.

### (Comparative Polymerization Example 2)

A mixture of tall oil rosin (30 g), maleic anhydride (12 g), and propylene glycol (11 g) was heated and stirred for one hour at 160°C under a nitrogen gas stream, and water produced therefrom was distilled off. Subsequently, the temperature was elevated to 250°C, and while the water produced along with the progress of polymerization was distilled off under reduced pressure, the reaction system was heated and stirred for 8 hours, without any change applied to the system. Trimellitic anhydride (2.2 g) was further added to the reaction system, and the mixture was heated and stirred for one hour. Subsequently, the reaction product thus obtained was taken out in a heat resistant container produced by processing TEFLON (registered trademark), and thus a polymer H-2 (weight average molecular weight: 29,000, molecular weight distribution: 12, glass transition point: 45°C, and acid value: 17 mg KOH/g) was obtained.

The polymer H-2 thus obtained did not contain a skeleton derived from dehydroabietic acid in the main chain.

### (Comparative Polymerization Example 3)

A mixture of DHA-1 (15 g), triethylene glycol (3.8 g), and ethyl ortho-titanate (0.06 g) was heated and stirred for one hour at 240°C under a nitrogen gas stream, and water produced therefrom was distilled off. Subsequently, while the water produced along with the progress of polymerization was distilled off under reduced pressure, the reaction system was heated and stirred for 10 hours, without any change applied to the system. The reaction product thus obtained was taken out in a heat resistant container produced by processing TEFLON (registered trademark), and thus a polymer H-3 (weight average molecular weight: 68,000, molecular weight distribution: 5.5, glass transition point: 90°C, and acid value: 4 mg KOH/g) was obtained.

**[Table 1]**

| Polymer | Glass transition point (°C) | Weight average molecular weight | Molecular weight distribution | Acid value (mg KOH/g) |
|---|---|---|---|---|
| P-1 | 56 | 10100 | 2.0 | 10 |
| P-2 | 78 | 34000 | 4.7 | 9 |
| P-3 | 45 | 4700 | 1.4 | 18 |
| P-4 | 51 | 8400 | 2.1 | 38 |
| P-5 | 57 | 15500 | 4.8 | 14 |
| P-6 | 52 | 11300 | 3.9 | 10 |
| P-7 | 54 | 12500 | 4.8 | 12 |
| P-8 | 54 | 13400 | 3.3 | 13 |
| P-9 | 61 | 17000 | 3.2 | 9 |
| P-10 | 58 | 14700 | 3.4 | 15 |
| P-11 | 59 | 17100 | 3.9 | 8 |
| P-12 | 58 | 19000 | 3.4 | 20 |
| P-13 | 49 | 8900 | 2.0 | 6 |
| P-14 | 53 | 14800 | 3.2 | 18 |
| P-15 | 50 | 15000 | 3.3 | 13 |
| P-16 | 53 | 16200 | 3.1 | 13 |
| P-17 | 59 | 15000 | 3.1 | 14 |
| P-18 | 52 | 42000 | 3.5 | 3 |
| P-19 | 68 | 64000 | 5.1 | - |
| P-20 | 64 | 58000 | 5.4 | - |
| P-21 | 52 | 72000 | 4.9 | - |
| P-22 | 59 | 51000 | 3.9 | - |
| P-23 | -5 | 46000 | 3.2 | - |
| P-24 | 53 | 13000 | 3.4 | 13 |
| P-25 | 51 | 17700 | 3.3 | 12 |
| P-26 | 56 | 15000 | 3.3 | 13 |
| H-1 | 52 | 26100 | 9.3 | 14 |
| H-2 | 45 | 29000 | 12.0 | 17 |
| H-3 | 90 | 68000 | 5.5 | 4 |

### <Example 1>

A resin dispersion was prepared as follows, by using the polymer P-1 derived from dehydroabietic acid obtained as described above.

### (Preparation of resin dispersion)

A mixture of the polymer (10 g) and methyl ethyl ketone (7.5 g) was stirred at 60°C, and the mixture was heated and dissolved. Subsequently, isopropanol (2.5 g) was added to the solution, and the mixture was left to cool to room temperature. Subsequently, a 10 mass% aqueous ammonia solution (0.55 ml) was added to the mixture at room temperature, and ion-exchanged water (40 g) was further added to the solution slowly at a flow rate of 1.57 (g/ml) to induce phase inversion emulsification. Thereafter, the solvent was distilled off in an evaporator under reduced pressure, and thus a resin dispersion D-1 was obtained.

### (Evaluation)

For the resin dispersion D-1 obtained in Example 1, the average particle size, dispersion stability, and aggregatability were respectively evaluated as described below.

### - Average particle size -

The average particle size (volume average particle size or median diameter) of the resin dispersion were measured by using a laser diffraction type particle size distribution analyzer (manufactured by Horiba, Ltd.; LA-920), and the average particle size was evaluated according to the evaluation criteria described below. The evaluation results are presented in Table 2.

### - Evaluation criteria -

A: The average particle size was equal to or greater than 80 nm and less than 200 nm.
B: The average particle size was equal to or greater than 50 nm and less than 80 nm, or equal to or greater than 200 nm and less than 400 nm.
C: The average particle size was equal to or greater than 400 nm and less than 800 nm.
D: The average particle size was 800 nm or greater, or unmeasurable.

### - Dispersion stability -

Within 24 hours after the resin dispersion was prepared, the average particle size was measured in the same manner as described above. Subsequently, the resin dispersion was left to stand in a sealed state in an environment at 25°C and a relative humidity of 50% for 7 days, and then the average particle size was measured in the same manner. The difference between the average particle size before standing and the average particle size after standing was calculated and evaluated according to the evaluation criteria described below. The results are presented in Table 2.

### - Evaluation criteria -

A: The particle size change was less than 100 nm.
B: The particle size change was equal to or greater than 100 nm and less than 1 µm.
C: The particle size change was greater than 1 µm.

### <Examples 2 to 20>

Resin dispersions D-2 to D-17 and D-24 to D-26 were respectively prepared in the same manner as described above in Example 1, except that polymers P-2 to P-17 and P-24 to P-26 were respectively used instead of the polymer P-1, and the resin dispersions were evaluated in the same manner. The evaluation results are presented in Table 2.

### <Comparative Examples 1 to 3>

Resin dispersions DH-1 to DH-3 were respectively prepared in the same manner as described above in Example 1, except that polymers H-1 to H-3 were respectively used instead of the polymer P-1, and the resin dispersions were evaluated in the same manner. The evaluation results are presented in Table 2.

**[Table 2]**

| | Resin dispersion | Polymer | Dispersibility | | Dispersion stability |
|---|---|---|---|---|---|
| | | | Evaluation | Average particle size (nm) | |
| Example 1 | D-1 | P-1 | A | 130 | A |
| Example 2 | D-2 | P-2 | B | 210 | A |
| Example 3 | D-3 | P-3 | B | 74 | B |
| Example 4 | D-4 | P-4 | C | 460 | B |
| Example 5 | D-5 | P-5 | A | 145 | A |
| Example 6 | D-6 | P-6 | A | 110 | A |
| Example 7 | D-7 | P-7 | A | 98 | A |
| Example 8 | D-8 | P-8 | B | 210 | A |
| Example 9 | D-9 | P-9 | B | 210 | A |
| Example 10 | D-10 | P-10 | A | 130 | A |
| Example 11 | D-11 | P-11 | A | 142 | A |
| Example 12 | D-12 | P-12 | A | 169 | A |
| Example 13 | D-13 | P-13 | C | 410 | B |
| Example 14 | D-14 | P-14 | A | 140 | A |
| Example 15 | D-15 | P-15 | A | 160 | A |
| Example 16 | D-16 | P-16 | A | 155 | A |
| Example 17 | D-17 | P-17 | A | 149 | A |
| Example 18 | D-24 | P-24 | A | 98 | A |
| Example 19 | D-25 | P-25 | A | 120 | A |
| Example 20 | D-26 | P-26 | A | 99 | A |
| Comparative Example 1 | DH-1 | H-1 | D | Not dispersed | - |
| Comparative Example 2 | DH-2 | H-2 | D | Not dispersed | - |
| Comparative | DH-3 | H-3 | C | 700 | C |
| Example 3 | | | | | |

### <Example 21> (Application to chemical toner)

A toner and a developer were prepared by using the resin dispersion D-1 obtained in Example 1, and a colorant dispersion and a releasing agent dispersion liquid prepared as described below, and the toner and the developer were evaluated. The results are presented in Table 3.

### (Preparation of colorant dispersion)

A cyan pigment (manufactured by Dainichiseika Color Chemicals Manufacturing Co., Ltd., Pigment Blue 15:3, copper phthalocyanine) (100 parts by mass), an anionic surfactant (manufactured by Dai-ichi Kogyo Seiyaku Co., Ltd., NEOGEN R) (10 parts by mass), and ion-exchanged water (350 parts by mass) were mixed, and the mixture was dispersed for one hour in a high pressure impact dispersing machine (HJP30006, manufactured by Sugino Machine, Ltd.). Thus, a black colorant dispersion was obtained.

### (Preparation of releasing agent dispersion)

A paraffin wax (HNP-9: manufactured by Nippon Seiro Co., Ltd.) (60 parts by mass), anionic surfactant NEOGEN R (6 parts by mass), and ion-exchanged water (200 parts by mass) were mixed, and the mixture was heated to 100°C to melt. The molten mixture was dispersed in a high pressure homogenizer (manufactured by APV Gaulin Co.), and thus a releasing agent dispersion was obtained.

### (Preparation of toner)

Ion-exchanged water (280 parts by mass), an anionic surfactant (manufactured by Dai-ichi Kogyo Seiyaku Co., Ltd., NEOGEN RK (20%)) (2.8 parts by mass), and the resin dispersion D-1 described above (360 parts by mass) were introduced into a 3-1 three-necked flask equipped with a thermometer, a pH meter, and a stirrer, and the mixture was stirred for 30 minutes at a temperature of 30°C and a speed of rotation of 150 rpm.

Subsequently, the colorant dispersion (60 parts by mass) and the releasing agent dispersion (80 parts by mass) were added to the mixture, and the resulting mixture was stirred for 5 minutes. Furthermore, 1% nitric acid was added thereto in small portions to adjust the pH to 3.0. Thereafter, polyaluminum chloride (0.4 parts by mass) was added thereto, the temperature of the mixture was increased to 50°C, and then 180 parts of the resin dispersion was added thereto.

After the mixture was stirred for 30 minutes, a 5 mass% aqueous solution of sodium hydroxide was added to the mixture to adjust the pH to 9.0. Subsequently, the temperature of the mixture was elevated to 90°C, and the mixture was stirred for 3 hours at 90°C and then cooled. Thus, a toner dispersion was obtained.

### (Preparation of toner particles)

The toner particle dispersion liquid obtained as described above was filtered, and the filter cake was washed with ion-exchanged water. The toner particles were dispersed again in ion-exchanged water, filtered, and washed. This operation was further repeated two times, and then the pH of the toner particle dispersion liquid was adjusted to 4.0 with 1% nitric acid. The toner particles were filtered and washed with ion-exchanged water until the electrical conductivity of the filtrate reached 15 µS/cm or less. Subsequently, the toner particles were dried under reduced pressure for 5 hours in an oven at 40°C, and thus a toner was obtained.

### (Preparation of carrier)

A silicone resin (SR2411 manufactured by Dow Corning Toray Co., Ltd.) (300 parts by mass), toluene (1200 parts by mass), and a ferrite core material (5 kg) having an average particle size of 50 µm were introduced into a rotating disk type fluidized bed coating apparatus, and the surface of the ferrite was coated with the silicone resin. Subsequently, the coated material was taken out and heated for 2 hours at 250°C. The coating film was cured, and thus a carrier was obtained.

### (Preparation of developer)

The toner and the carrier were mixed such that the toner concentration would be 5% by mass, and the total amount would be 1 kg. The product was used as a developer.

### (Evaluation)

### - Toner particle size -

The average particle size (volume average particle size and median diameter) of the toner particles obtained as described above were measured by using a laser diffraction type particle size distribution analyzer (manufactured by Horiba, Ltd., LA-920), and the average particle size was evaluated according to the evaluation criteria described below. The evaluation results are presented in Table 3.

### - Evaluation criteria -

A: The average particle size was equal to or greater than 5 µm and less than 7 µm.
B: The average particle size was equal to or greater than 1 µm and less than 5 µm, or equal to or greater than 7 µm and less than 10 µm.
C: The average particle size was less than 1 µm, or 10 µm or greater.

The operation as described below was carried out by using the developer thus obtained, and the lower limit temperature of fixing, image quality, and color tone were evaluated. The evaluation results are presented in Table 3.

### - Lower limit temperature of fixing -

The evaluation of the fixability of image was carried out such that 1.0 ± 0.05 mg/cm² of the toner would be developed in a solid image on a transfer paper (PAPER P manufactured by Fuji Xerox Co., Ltd.), and the lower limit temperature of fixing was measured. Meanwhile, the lower limit temperature of fixing was determined such that the fixing belt temperature at which the residual ratio of the image density after a fixed image obtained was rubbed by patting was 70% or greater, was defined as the lower limit temperature of fixing.

### - Evaluation criteria -

A: Lower than 130°C.
B: Equal to or higher than 130°C and lower than 150°C.
C: Equal to or higher than 150°C.

### - Image quality -

A print test (low temperature low humidity conditions (10°C, 20% RH), and high temperature high humidity conditions (30°C, 85% RH)) was carried out by using the developer described above and a DOCUCENTRE COLOR 400CP (manufactured by Fuji Xerox Co., Ltd.). The print materials were evaluated according to the following evaluation criteria.

### - Evaluation criteria -

A: No image abnormality was observed.
B: Very slight differences in the color tone, image density and the like were observed, but at a level without any problem in a conventional use environment.
C: Color change, density change, contamination of the ground section, and the like were obvious.

### - Color tone -

A print test (low temperature low humidity conditions (10°C, 20% RH), and high temperature high humidity conditions (30°C, 85% RH)) was carried out by using the developer described above and a DOCUCENTRE COLOR 400CP (manufactured by Fuji Xerox Co., Ltd.). The print materials were evaluated according to the following evaluation criteria.

### - Evaluation criteria -

A: The color tone of the colorant could be clearly reproduced.
B: The color tone of the colorant appeared yellowish, and thus the tint was damaged.

### <Examples 22 to 40>

Toners and developers were obtained in the same manner as described above in Example 21, except that the resin dispersions D-2 to D-17 and D-24 to D-26 obtained in Examples 2 to 20 were used instead of the resin dispersion D-1.

The toners and developers thus obtained were evaluated in the same manner as described above. The evaluation results are presented in Table 3.

### <Example 41>

A crystalline polyester resin (K-1) was synthesized according to the descriptions of paragraph [0191] of JP-A No. 2009-229919, and also, a crystalline polyester resin dispersion DK-1 was prepared according to the descriptions of paragraph [0206] of the same document.

A toner and a developer were prepared in the same manner as in Example 21, except that the crystalline polyester resin dispersion K-1 thus obtained was used, and 36 parts by mass of the resin dispersion DK-1 used in the preparation of toner in Example 21 was replaced with the crystalline polyester resin dispersion DK-1.

The developer thus obtained was evaluated in the same manner as described above. The evaluation results are presented in Table 3.

### <Example 42 (application to pulverized toner)>

### (Preparation of toner)

A mixture of the copolymer of the invention P-1 (100 parts by mass) as a binder resin, carnauba wax (5 parts by mass) as a releasing agent, a charge control agent (an azo complex dye) (2 parts by mass), and a colorant (carbon black) (13 parts by mass) was kneaded for 50 minutes in a two-roll kneader that had been heated to 110°C, and then the kneading product was pulverized in a mechanical pulverizer. Toner primary particles A were obtained by using a classifier. Meanwhile, for the average particle size, the volume average particle size (median diameter) was measured with a laser diffraction type particle size distribution analyzer (manufactured by Horiba, Ltd., LA-920).

A mixture of the copolymer of the invention P-1 (100 parts by mass) as a binder resin, carnauba wax (5 parts by mass) as a releasing agent, a charge control agent (an azo complex dye) (2 parts by mass), and a cyan pigment (manufactured by Dainichiseika Color Chemicals Manufacturing Co., Ltd., Pigment Blue 15:3, copper phthalocyanine) (13 parts by mass) was kneaded for 80 minutes in a two-roll kneader that had been heated to 120°C, and then the kneading product was pulverized in a mechanical pulverizer. Thus, toner primary particles B were obtained.

The toner primary particles A (100 parts by mass) were mixed with silica fine particles (0.8 parts by mass) having an average particle size of 120 nm in a Henschel mixer at a circumferential speed of 20 m/sec, and thus secondary particles A were obtained. Similarly, the toner primary particles B (100 parts by mass) were mixed with silica fine particles (1.2 parts by mass) having an average particle size of 15 nm in a Henschel mixer at a circumferential speed of 20 m/sec, and thus secondary particles B were obtained.

The secondary particles A (30 parts by mass) and the secondary particles B (70 parts by mass) were mixed in a Henschel mixer at a circumferential speed of 20 m/sec, and the mixture was sieved with a 60-µm sieve to classify coarse particles. Thus, a toner was prepared.

### <Preparation of carrier>

300 parts of a silicone resin (SR2411 manufactured by Dow Corning Toray Co., Ltd.), 1200 parts of toluene, and 5 kg of a ferrite core material having an average particle size of 50 µm were introduced into a rotating disk type fluidized bed coating apparatus, and the surface of the ferrite was coated with the silicone resin. Subsequently, the coated material was taken out and heated for 2 hours at 250°C. The coating film was cured, and thus a carrier was obtained.

### <Preparation of developer>

The toner and the carrier were mixed such that the toner concentration would be 5%, and the total amount would be 1 kg, and thus the mixture was used as a developer.

### <Example 43>

A toner and a developer were obtained in the same manner as in Example 42, except that the resin dispersion D-18 was used instead of the resin dispersion D-1.

The toner and the developer thus obtained were evaluated in the same manner. The evaluation results are presented in Table 3.

### <Comparative Examples 4 to 6>

Toners and developers were obtained in the same manner as in Example 42, except that the resin dispersions DH-1 to DH-3 were used instead of the resin dispersion D-1.

The toners and the developers thus obtained were evaluated in the same manner.

The evaluation results are presented in Table 3.

**[Table 3]**

| | Resin dispersion | Toner preparation method | Toner particle size | | Lower limit temperature of fixing | Image quality | Color tone |
|---|---|---|---|---|---|---|---|
| | | | Evaluation | Average particle size (µm) | | | |
| Example 21 | D-1 | Emulsion aggregation | A | 6.1 | A | A | A |
| Example 22 | D-2 | Emulsion aggregation | B | 4.0 | B | B | A |
| Example 23 | D-3 | Emulsion aggregation | B | 8.5 | A | B | A |
| Example 24 | D-4 | Emulsion aggregation | B | 8.8 | A | B | A |
| Example 25 | D-5 | Emulsion aggregation | A | 6.3 | A | A | A |
| Example 26 | D-6 | Emulsion aggregation | A | 5.9 | A | A | A |
| Example 27 | D-7 | Emulsion aggregation | A | 5.5 | A | A | A |
| Example 28 | D-8 | Emulsion aggregation | A | 6.0 | A | B | A |
| Example 29 | D-9 | Emulsion aggregation | A | 5.4 | A | B | A |
| Example 30 | D-10 | Emulsion aggregation | A | 5.6 | A | A | A |
| Example 31 | D-11 | Emulsion aggregation | A | 6.2 | A | A | A |
| Example 32 | D-12 | Emulsion aggregation | A | 6.9 | A | A | A |
| Example 33 | D-13 | Emulsion aggregation | A | 6.8 | A | B | A |
| Example 34 | D-14 | Emulsion aggregation | A | 6.1 | A | A | A |
| Example 35 | D-15 | Emulsion aggregation | A | 5.7 | A | A | A |
| Example 36 | D-16 | Emulsion aggregation | A | 6.3 | A | A | A |
| Example 37 | D-17 | Emulsion aggregation | A | 5.8 | A | A | A |
| Example 38 | D-24 | Emulsion aggregation | A | 5.4 | A | A | A |
| Example 39 | D-25 | Emulsion | A | 5.8 | A | A | A |
| | | aggregation | | | | | |
| Example 40 | D-26 | Emulsion aggregation | A | 5.5 | A | A | A |
| Example 41 | D-16/DK-1 | Emulsion aggregation | A | 6.0 | A | A | A |
| Example 42 | D-1 | Pulverization | B | 8.9 | A | B | A |
| Example 43 | D-18 | Pulverization | B | 8.9 | B | B | A |
| Comparative Example 4 | DH-1 | Pulverization | C | 12.0 | B | C | B |
| Comparative Example 5 | DH-2 | Pulverization | C | 10.0 | B | C | B |
| Comparative Example 6 | DH-3 | Pulverization | C | 9.5 | C | B | A |

### <Example 44: Application to transparent film>

The polymer of the invention P-19 (10 g) was heated and dissolved in 100 ml of toluene/methylene chloride (1/1), the solution was cooled, and then a transparent film having a thickness of 100 µm was produced by a casting method. The film thus obtained was tough, and had a total light transmittance of 88%. This film was immersed in a 5 mass% aqueous solution of sodium hydroxide at 25°C for 24 hours, and then the film was dissolved in tetrahydrofuran. The average molecular weight was measured by GPC, and the value was 69,000. The polymer was substantially not subjected to hydrolysis.

For a comparison, a film having a thickness of 100 µm was produced by using a polylactic acid (LACEA H-140) manufactured by Mitsui Chemicals, Inc., and the same test was carried out. As a result, the film was completely dissolved and lost. After the solution was neutralized, the molecular weight was measured by GPC. As a result, a polymer having a molecular weight of 1,000 or greater did not exist.

### <Example 45: Application to transparent film>

The production and evaluation of a film were carried out in the same manner as in Example 44, except that the polymer P-20 was used instead of the polymer P-19. The film thus obtained was tough and had a total light transmittance of 90%. Furthermore, no change was observed in the average molecular weight before and after the hydrolysis test, and the polymer was substantially not subjected to hydrolysis.

### <Example 46: Application to plastic modifying material>

The polymer of the invention P-21 (10 g) was heated and kneaded together with a polycarbonate (PANLITE L-1225Y) (10 g) manufactured by Teijin Chemicals, Ltd. and the polylactic acid (10 g) used in Example 37, and a film having a thickness of 200 µm was produced by using a hot press (240°C). This film was exposed for 500 hours under high temperature high humidity conditions at 50°C/95% RH, and the tensile strengths of the film before and after the test were measured.

Similarly, a polymer blend of the polycarbonate and polylactic acid described above excluding the polymer of the invention was used to produce a film, and the film was forcibly deteriorated under the same conditions. The tensile strengths before and after the test were measured. Meanwhile, there was no difference in the tensile strength of the two samples before the forcible test.

As a result, when the polymer of the invention was added, the decrease in tensile strength was less than 5%; however, when the polymer of the invention was not added, the tensile strength decreased by about 30%.

### <Example 47: Application to plastic modifying material>

The production and evaluation of a film were carried out in the same manner as in Example 46, except that the polymer P-22 was used instead of the polymer P-21. The decrease in tensile strength was less than 5%.

### <Example 48: Application to hot melt adhesive>

The polymer of the invention P-23 was used to produce a sheet having a thickness of 500 µm, by a melt film forming method. This sheet was sandwiched between a PET (polyethylene terephthalate) plate and a PVC (polyvinyl chloride) plate, each having a thickness of 1 mm, and the assembly was pressed for 10 seconds at 150°C.

After the product was cooled, the tensile shear strength was measured according to JIS K6850.

Similarly, a PET plate and a PVC plate were adhered by using a commercially available sheet-like hot melt adhesive formed from an ethylene-vinyl acetate polymer, and the tensile shear strength was measured.

As a result, the tensile shear strength was almost equal in both cases. Furthermore, even if PC (polycarbonate) plates only were used, ABS (acrylonitrile/butadiene/styrene copolymer) plates only were used, or a PC plate and an ABS plate were used, instead of a PET plate and a PVC plate, there was no difference in the adhesive force between the invention and the ethylene-vinyl acetate polymer, and both were considered to be at a practically usable level.

### <Example 49: Application to thermoplastic elastomer>

The polymer of the invention P-23 was used to produce a sheet having a thickness of 200 µm by a melt film forming method. This sheet exhibited rubber elasticity at normal temperature, and had an elongation ratio of 500% and a permanent compression set of 25%. In many of known thermoplastic elastomers, additives are added for improvements of the properties. However, the thermoplastic elastomer of the invention exhibits rubber elasticity of high potential without any added additives.

The polymer of the invention is an elastic material whose raw materials are all derived from biomasses, and which is safe to living organisms, has a low glass transition point, and is moldable at 100°C to 150°C. Thus, the polymer of the invention can be expected to be useful in various applications.

### <Inference>

From the results described above, it was found that the polymer of the invention, which is a naturally derived resin obtainable by extraction from rosin, can be used in various applications such as a plastic modifier, transparent films, and a binder for toner, and exhibits effects that are equal or superior to the effects of the conventional resins derived from petroleum. Therefore, the polymer of the invention can be used in a wide variety of applications in place of the conventional resins derived from petroleum.

## Claims

1. A polymer derived from dehydroabietic acid, comprising a repeating unit containing a skeleton derived from dehydroabietic acid in the main chain, and having a glass transition point measured by a differential scanning calorimeter of 80°C or lower.

2. The polymer according to claim 1, which is a polyester polymer.

3. The polymer according to claim 1 or 2, wherein the repeating unit is represented by the following formula (A): 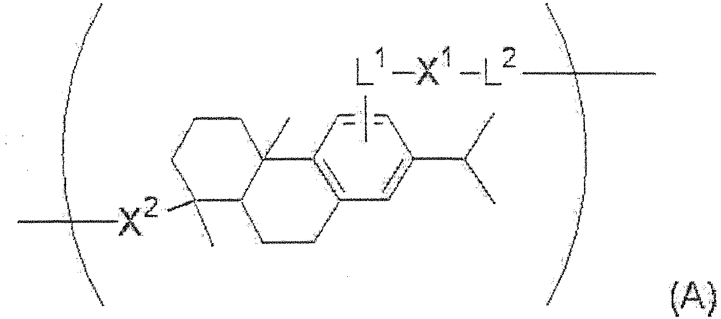 wherein, in formula (A), L¹ represents a divalent organic group having 3 or more carbon atoms; L² represents a divalent organic group; X¹ represents a carbonyloxy group or an oxycarbonyl group; and X² represents an oxycarbonyl group or a carbonyloxymethyl group.

4. The polymer according to claim 3, wherein L¹ in formula (A) represents a divalent organic group having 3 or more carbon atoms that comprises at least one selected from the group consisting of an alkylene group, an alkenylene group, an arylene group, an aralkylene group, and a group represented by the following formula (D); or a divalent organic group having 3 or more carbon atoms that comprises at least one selected from the group consisting of an alkylene group, an alkenylene group, an arylene group, an aralkylene group, and a group represented by the following formula (D), combined with at least one of an oxygen atom or a carbonyl group: 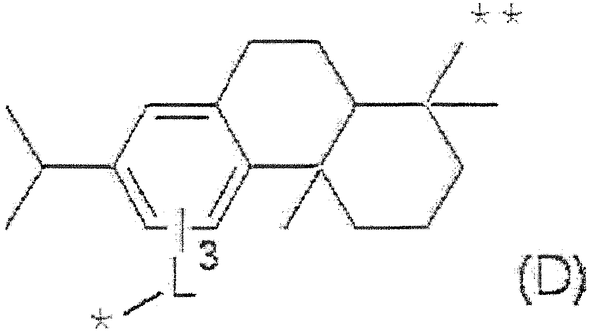 wherein, in formula (D). L³ represents a single bond or a divalent organic group having 1 to 12 carbon atoms; * represents a bonding position to the aromatic ring in formula (A); and ** represents a bonding position to X¹.

5. The polymer according to claim 3 or 4, wherein L² in formula (A) represents a divalent organic group having 3 or more carbon atoms that comprises at least one selected from the group consisting of an alkylene group, an arylene group and an aralkylene group; or a divalent organic group having 3 or more carbon atoms that comprises at least one selected from the group consisting of an alkylene group, an arylene group and an aralkylene group, combined with at least one of an oxygen atom or a carbonyl group.

6. The polymer according to any one of claims 3 to 5, wherein L² in formula (A) represents a divalent organic group having 3 or more carbon atoms that comprises an alkylene group combined with at least one of an oxygen atom or a carbonyl group.

7. The polymer according to any one of claims 3 to 6, comprising only the repeating unit represented by formula (A).

8. The polymer according to any one of claims 1 to 7, having a weight average molecular weight measured by GPC of from 5,000 to 500,000.

9. The polymer according to any one of claims 1 to 8, having an acid value measured according to JIS K 0070:1992 of from 5 mgKOH/g to 40 mgKOH/g.

10. An aqueous resin dispersion comprising the polymer according to any one of claims 1 to 9.

11. A binder for toner comprising the polymer according to any one of claims 1 to 9.

12. A toner comprising the polymer according to any one of claims 1 to 9, a pigment, and a releasing agent.

13. The toner according to claim 12, wherein the polymer is derived from the aqueous resin dispersion according to claim 10.

14. A developer comprising the toner according to claim 12 or 13 and a carrier.

15. A film comprising the polymer according to any one of claims 1 to 9.

## Patentansprüche

1. Polymer, erhalten aus Dehydroabietinsäure, umfassend eine Wiederholungseinheit, die ein Gerüst enthält, das aus Dehydroabietinsäure erhalten ist, in der Hauptkette, und das eine Glasübergangstemperatur, gemessen mit einem Differentialkalorimeter, von 80°C oder niedriger aufweist.

2. Polymer gemäß Anspruch 1, welches ein Polyesterpolymer ist.

3. Polymer gemäß Anspruch 1 oder 2, worin die Wiederholungseinheit durch die folgende Formel (A) dargestellt wird: 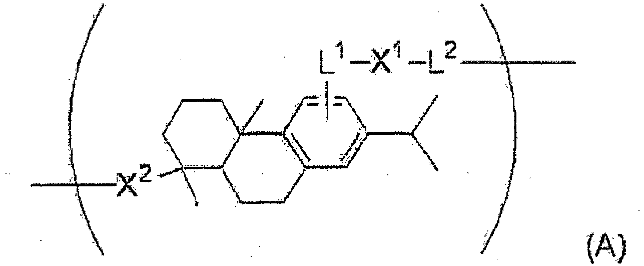 worin in der Formel (A) L¹ eine divalente organische Gruppe mit 3 oder mehr Kohlenstoffatomen darstellt, L² eine divalente organische Gruppe darstellt; X¹ eine Carbonyloxygruppe oder eine Oxycarbonylgruppe darstellt; und X² eine Oxycarbonylgruppe oder eine Carbonyloxymethylgruppe darstellt.

4. Polymer gemäß Anspruch 3, worin L¹ in der Formel (A) eine divalente organische Gruppe mit 3 oder mehr Kohlenstoffatomen, die zumindest eines umfasst, ausgewählt aus der Gruppe, bestehend aus einer Alkylengruppe, einer Alkenylengruppe, einer Arylengruppe, einer Aralkylengruppe und einer durch die folgende Formel (D) dargestellten Gruppe; oder eine divalente organische Gruppe mit 3 oder mehr Kohlenstoffatomen darstellt, die zumindest eines umfasst, das ausgewählt ist aus der Gruppe, bestehend aus einer Alkylengruppe, einer Alkenylengruppe, einer Arylengruppe, einer Aralkylengruppe und einer durch die folgende Formel (D) dargestellten Gruppe, kombiniert mit zumindest einem von einem Sauerstoffatom oder einer Carbonylgruppe: 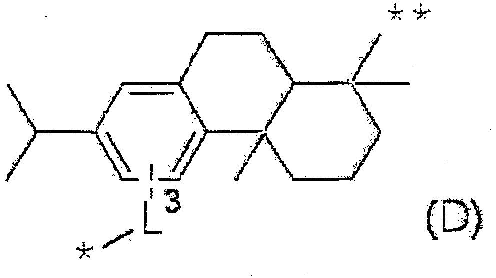 worin in der Formel (D) L³ eine Einfachbindung oder eine divalente organische Gruppe mit 1 bis 12 Kohlenstoffatomen darstellt; * eine Bindungsposition an den aromatischen Ring in der Formel (A) darstellt; und ** eine Bindungsposition an X¹ darstellt.

5. Polymer gemäß Anspruch 3 oder 4, worin L² in Formel (A) eine divalente organische Gruppe mit 3 oder mehr Kohlenstoffatomen, die mindestens eines umfasst, ausgewählt aus der Gruppe, bestehend aus einer Alkylengruppe, einer Arylengruppe und einer Aralkylengruppe; oder eine divalente organische Gruppe mit 3 oder mehr Kohlenstoffatomen, die mindestens eines umfasst, ausgewählt aus der Gruppe, bestehend aus einer Alkylengruppe, einer Arylengruppe und einer Aralkylengruppe, kombiniert mit zumindest einem von einem Sauerstoffatom oder einer Carbonylgruppe, darstellt.

6. Polymer gemäß irgendeinem der Ansprüche 3 bis 5, worin L² in Formel (A) eine divalente organische Gruppe mit 3 oder mehr Kohlenstoffatomen darstellt, die eine Alkylengruppe umfasst, die mit zumindest einem von einem Sauerstoffatom oder einer Carbonylgruppe kombiniert ist.

7. Polymer gemäß irgendeinem der Ansprüche 3 bis 6, einzig umfassend die durch die Formel (A) dargestellte Wiederholungseinheit.

8. Polymer gemäß irgendeinem der Ansprüche 1 bis 7 mit einem gewichtsgemittelten Molekulargewicht von 5.000 bis 500.000, gemessen mittels GPC.

9. Polymer gemäß irgendeinem der Ansprüche 1 bis 8, mit einem Säurewert von 5 mgKOH/g bis 40 mgKOH/g, gemessen entsprechend JIS K 0070:1992.

10. Wässrige Harzdispersion, umfassend das Polymer gemäß irgendeinem der Ansprüche 1 bis 9.

11. Bindemittel für Toner, umfassend das Polymer gemäß irgendeinem der Ansprüche 1 bis 9.

12. Toner, umfassend das Polymer gemäß irgendeinem der Ansprüche 1 bis 9, ein Pigment und ein Ablösemittel.

13. Toner gemäß Anspruch 12, worin das Polymer aus der wässrigen Harzdispersion gemäß Anspruch 10 erhalten ist.

14. Entwickler, umfassend den Toner gemäß Anspruch 12 oder 13 und einen Träger.

15. Folie, umfassend das Polymer gemäß irgendeinem der Ansprüche 1 bis 9.

## Revendications

1. Polymère dérivé d'acide déhydroabiétique, comprenant une unité répétitive contenant un squelette dérivé d'acide déhydroabiétique dans la chaîne principale, et ayant un point de transition vitreuse mesuré par un calorimètre à balayage différentiel de 80 °C ou inférieur.

2. Polymère selon la revendication 1, qui est un polymère de polyester.

3. Polymère selon la revendication 1 ou 2, dans lequel l'unité répétitive est représentée par la formule (A) suivante : 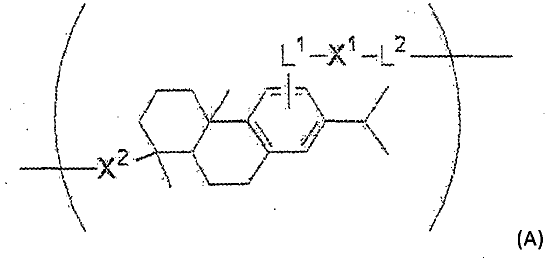 dans lequel, dans la formule (A), L¹ représente un groupe organique divalent ayant 3 atomes de carbone ou plus; L² représente un groupe organique divalent; X¹ représente un groupe carbonyloxy ou un groupe oxycarbonyle; et X² représente un groupe oxycarbonyle ou un groupe carbonyloxyméthyle.

4. Polymère selon la revendication 3, dans lequel L¹ dans la formule (A) représente un groupe organique divalent ayant 3 atomes de carbone ou plus qui comprend au moins l'un sélectionné dans le groupe constitué d'un groupe alkylène, d'un groupe alcénylène, d'un groupe arylène, d'un groupe aralkylène, et d'un groupe représenté par la formule (D) suivante; ou un groupe organique divalent ayant 3 atomes de carbone ou plus qui comprend au moins l'un sélectionné dans le groupe constitué d'un groupe alkylène, d'un groupe alcénylène, d'un groupe arylène, d'un groupe aralkylène, et d'un groupe représenté par la formule (D) suivante, combiné avec au moins l'un d'un atome d'oxygène ou d'un groupe carbonyle : 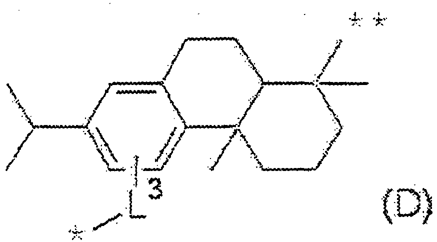 dans lequel, dans la formule (D), L³ représente une liaison simple ou un groupe organique divalent ayant 1 à 12 atomes de carbone; * représente une position de liaison au cycle aromatique dans la formule (A); et ** représente une position de liaison à X¹.

5. Polymère selon la revendication 3 ou 4, dans lequel L² dans la formule (A) représente un groupe organique divalent ayant 3 atomes de carbone ou plus qui comprend au moins l'un sélectionné dans le groupe constitué d'un groupe alkylène, d'un groupe arylène et d'un groupe aralkylène; ou un groupe organique divalent ayant 3 atomes de carbone ou plus qui comprend au moins l'un sélectionné dans le groupe constitué d'un groupe alkylène, d'un groupe arylène et d'un groupe aralkylène, combiné avec au moins l'un d'un atome d'oxygène ou d'un groupe carbonyle.

6. Polymère selon l'une quelconque des revendications 3 à 5, dans lequel L² dans la formule (A) représente un groupe organique divalent ayant 3 atomes de carbone ou plus qui comprend un groupe alkylène combiné avec au moins l'un d'un atome d'oxygène ou d'un groupe carbonyle.

7. Polymère selon l'une quelconque des revendications 3 à 6, comprenant seulement l'unité répétitive représentée par la formule (A).

8. Polymère selon l'une quelconque des revendications 1 à 7, ayant un poids moléculaire moyen en poids mesuré par GPC de 5000 à 500 000.

9. Polymère selon l'une quelconque des revendications 1 à 8, ayant une valeur d'acide mesurée selon JIS K 0070 : 1992 de 5 mgKOH/g à 40 mgKOH/g.

10. Dispersion de résine aqueuse comprenant le polymère selon l'une quelconque des revendications 1 à 9.

11. Liant pour toner comprenant le polymère selon l'une quelconque des revendications 1 à 9.

12. Toner comprenant le polymère selon l'une quelconque des revendications 1 à 9, un pigment, et un agent de libération.

13. Toner selon la revendication 12, dans lequel le polymère est dérivé de la dispersion de résine aqueuse selon la revendication 10.

14. Révélateur comprenant le toner selon la revendication 12 ou 13 et un véhicule.

15. Film comprenant le polymère selon l'une quelconque des revendications 1 à 9.
